# EUROPEAN PATENT APPLICATION

(11) **EP 4 728 872 A2**
(43) Date of publication of application: **22.04.2026**
(21) Application number: 26161903.5
(22) Date of filing: 09.12.2019
(51) Int. Cl.: A23G 1/40, A23G 3/42

(54) **FAT-BASED CONFECTIONERY COMPOSITION**

(30) Priority: 10.12.2018 GB 201820106
(62) Divisional of application: 19818026.7
(71) Applicant: Kraft Foods Schweiz Holding GmbH, 6300 Zug (CH)
(72) Inventor: HE, Qi, Reading, RG6 6LA (GB); MUKHERJEE, Neil, East Hanover, 07936 (US); SPELMAN, Kieran P., East Hanover, 07936 (US); ELLEMAN, Carole, Reading, RG6 6LA (GB)
(74) Representative: Boult Wade Tennant LLP

(57) **Abstract**

A fat-based confectionery composition comprising a crystalline oligosaccharide. The crystalline oligosaccharide suitably has a melting point of at least 60°C. The crystalline oligosaccharide in the fat-based confectionery composition replaces at least a part of the added sugar content compared to a reference fat-based confectionery composition and therefore reduces the total sugars compared to said reference composition. The fat-based confectionery composition may therefore be considered a reduced sugar confectionery product. The fat-based confectionery composition may have a similar taste and texture to the reference composition, in particular a similar viscosity and mouthfeel to a reference "full sugar" composition. The fat-based confectionery composition may be used to reduce the calorie intake, especially the intake of sugars, in consumers and may therefore provide a health benefit to said consumers. A method for producing the fat-based confectionery composition is also provided.

## Description

### Field

The present invention relates to a fat-based confectionery composition and to a method for the manufacture of a fat-based confectionery composition. In particular, the invention relates to a fat-based confectionery composition comprising a crystalline oligosaccharide and to the use of crystalline oligosaccharides in fat-based confectionery compositions.

### Background

Fat-based confectionery compositions, for example chocolate, fillings, crèmes and icings, typically comprise sugar particles dispersed within a fat matrix. Usually the sugar content of such fat-based confectionery compositions is greater than 40 wt%. Consumers and public health bodies are becoming increasingly concerned about the sugar content of foods and in particular about the sugar content of confectionery products such as chocolate. The increased consumption of high sugar content foods has been linked to health problems including obesity, diabetes and other metabolic diseases, and also may lead to poor dental health. Confectionery products comprising less sugar, which may be termed 'light' and/or 'sugar free' products, are therefore growing in popularity.

Accordingly it would be desirable to provide a fat-based confectionery composition with reduced sugar content.

However, sugar, typically sucrose, is a key component in many confectionery products, acting both as a sweetener and bulking agent. The bulking property of sucrose can be replicated by other water-soluble sugars, for example palatinose, trehalose, allulose, tagatose and dextrose with only minor differences in organoleptic properties.

Sugar alcohols, for example maltitol, can also be used as bulking agents. However, these compounds are usually synthetically prepared using catalytic hydrogenation processes and are therefore not well accepted by consumers who often prefer non-synthetic or natural ingredients. Sugar alcohols are less sweet than sucrose but generally provide fewer calories because they are incompletely digestible.

Attempts have also been made to reduce or replace sucrose in confectionery products with soluble fibres, for example polydextrose, inulin and other dietary fibres. However, when added to chocolate to reduce sugar content, inulins may increase the viscosity of said chocolate which is problematic for the production processes, for example the tempering, conching and moulding of chocolate or when using the chocolate as a coating.

### Summary of the Invention

The inventors have found that the use of oligosaccharides in fat-based confectionery compositions may give an unappealing mouthfeel and/or rheological properties, e.g. a sticky, gummy or more viscous mouthfeel, similar to that of candy floss (known as cotton candy in the US). This unappealing mouthfeel may be defined as requiring a relatively high amount of effort on the part of the consumer to disintegrate a confectionery product in their mouth to an extent which facilitates swallowing. This unappealing mouthfeel may be alternatively or further defined as the tendency of the fat-based confectionery composition to stick to a consumer's teeth during eating. This unappealing mouthfeel is undesirable in confectionery products such as chocolate and fillings (or crèmes), wherein a smooth creamy texture is preferred.

It is one aim of the present invention, amongst others, to provide a fat-based confectionery composition that addresses at least one disadvantage of the prior art, whether identified here or elsewhere, or to provide an alternative to existing fat-based confectionery compositions. For instance it may be an aim of the present invention to provide a fat-based confectionery composition which comprises a reduced amount of sucrose compared to a standard fat-based confectionery composition whilst having an acceptable mouthfeel, i.e. a non-gummy or non-sticky mouthfeel.

According to aspects of the present invention, there is provided a fat-based confectionery composition, method and use as set forth in the appended claims. Other features of the invention will be apparent from the dependent claims, and from the description which follows.

According to a first aspect of the present invention, there is provided a fat-based confectionery composition comprising a crystalline oligosaccharide, wherein the crystalline oligosaccharide does not have a melting point below 60 °C. Suitably the crystalline oligosaccharide has a melting point of at least 60°C.

Examples of such fat-based confectionery compositions are chocolate, fillings, crèmes, fondants and icings. These confectionery compositions all contain a fat as a predominant feature of the composition, for example sufficient fat to form a continuous fat phase throughout the composition. The fat-based confectionery compositions of the present invention may therefore be additionally or alternatively described as a confectionery composition comprising a continuous fat phase and a crystalline oligosaccharide dispersed and/or suspended within the continuous fat phase. Such a composition may be described as a fat-continuous confectionery composition. Suitably such fat-based confectionery compositions comprise fat and carbohydrates. The fat-based confectionery compositions of this aspect may be additionally or alternatively defined as a confectionery composition comprising a fat and a crystalline oligosaccharide, wherein the crystalline oligosaccharide has a melting point of at least 60°C. Such fat-based confectionery compositions comprise a relatively low amount of water and may therefore not be considered to be aqueous or to have hydrophilic characteristics. For example, the fat-based confectionery composition suitably has a water content of less than 10 wt%, suitably less than 5 wt%, suitably less than 4 wt%, suitably less than 3 wt% water.

By the term "fat" we mean to encompass suitable oils, such as vegetable oils. Therefore the fat-based confectionery composition of this first aspect may be additionally or alternatively defined as a fat- or oil-based confectionery composition.

The fat-based confectionery composition may comprise a vegetable fat. In some embodiments, the fat-based confectionery composition comprises a cocoa-derived fat, for example cocoa butter.

In some embodiments the fat-based confectionery composition comprises a non-cocoa-derived vegetable fat. Such vegetable fats may be classified as lauric, non-lauric (non-temper) and non-lauric (temper) fats.

In such embodiments, the fat-based confectionery composition may comprise a lauric fat, for example an oil such as coconut oil and/or palm kernel oil. In some embodiments the fat-based confectionery composition comprises hydrogenated palm kernel oil. In some embodiments the fat-based confectionery composition comprises fractionated palm kernel oil.

In such embodiments, the fat-based confectionery composition may comprise a non-lauric fat, which can be classified as either temper or non-temper. Suitable temper non-lauric fats include fractionated palm and shea butter. Suitable non-temper non-lauric fats include hydrogenated and/or fractionated palm and soya fat. For example, the fat-based confectionery composition may comprise a low-trans or no-trans fat.

The fat of the fat-based confectionery composition may be provided by a mixture of more than one fat or oil.

The fat-based confectionery composition of this first aspect suitably comprises at least 3 wt% fat, suitably at least 5 wt%, suitably at least 10 wt% fat, suitably at least 15 wt%, suitably at least 20 wt%, suitably at least 22 wt% fat. In some embodiments, the fat-based confectionery composition comprises at least 25 wt% fat, for example at least 30 wt% fat.

Suitably the fat-based confectionery composition comprises up to 60 wt% fat, suitably up to 50 wt% fat, suitably up to 45 wt% or up to 40 wt% fat.

Suitably in some embodiments the fat-based confectionery composition comprises from 10 wt% to 60 wt% fat, suitably from 10 wt% to 50 wt% fat, suitably from 15 wt% to 45 wt% fat.

Suitably in some embodiments the fat-based confectionery composition comprises from 20 wt% to 40 wt% fat, for example from 20 wt% to 35 wt% fat.

The fat-based confectionery composition suitably comprises carbohydrates. Carbohydrates can be classified as monosaccharides, disaccharides, oligosaccharides and polysaccharides. Monosaccharides and disaccharides are commonly referred to as sugars.

Suitably the fat-based confectionery composition comprises at least 40 wt% carbohydrates, suitably at least 45 wt%, suitably at least 50 wt%, for example at least 55 wt% or at least 60 wt% carbohydrates. Suitably the fat-based confectionery composition comprises up to 80 wt% carbohydrates, suitably up to 75 wt%, suitably up to 70 wt% or up to 65 wt% carbohydrates.

Suitably the fat-based confectionery composition comprises from 40 wt% to 80 wt% carbohydrates, suitably from 50 wt% to 80 wt% carbohydrates, suitably from 50 wt% to 70 wt% carbohydrates, suitably from 55 wt% to 70 wt% carbohydrates, suitably from 60 wt% to 70 wt% carbohydrates, including the crystalline oligosaccharide.

In some embodiments the fat-based confectionery composition comprises 10 wt% to 50 wt% fat and 50 wt% to 90 wt% carbohydrates, suitably 50 wt% to 80 wt% carbohydrates. In some embodiments the fat-based confectionery composition comprises 20 wt% to 40 wt% fat and 60 wt% to 80 wt% carbohydrates, suitably 55 wt% to 70 wt% carbohydrates, including the crystalline oligosaccharide.

In some embodiments a proportion of the carbohydrates are provided by monosaccharides and disaccharides, which may be referred to herein as sugars. Suitably the fat-based confectionery composition comprises sugar, i.e. one or more sugars. Suitably the sugar is or comprises a 'natural sugar', for example sucrose, derived from a natural source. Suitably the sugar comprises sucrose and/or lactose (for example, in milk chocolate compositions). Monosaccharides such as glucose may also be considered to be natural sugars. Therefore the term 'sugar' used herein may refer to sucrose, lactose and monosaccharides such as glucose.

Typical fat-based confectionery compositions comprise sugar, for example sucrose, to provide the sweet taste that consumers expect from such confectionery compositions. The inventors have found that by including a crystalline oligosaccharide in the fat-based confectionery composition of the first aspect, the total amount of sugar (for example sucrose and/or lactose) in the fat-based confectionery composition can be reduced compared to a reference 'full sugar' fat-based confectionery composition of the prior art.

The reduction of the amount of sucrose may be beneficial as oligosaccharides are lower in calorie content (typically less than 2.5 kcal/g) compared to sucrose (3.9 kcal/g). Therefore the fat-based confectionery composition may be used to reduce the calorie content of the fat-based confectionery composition and therefore reduce the calorie intake, especially the intake of sugars, of consumers eating said compositions. This may provide a health benefit to said consumers. Partially digestible oligosaccharides also have a relatively low glycaemic index, particularly compared with sugars such as sucrose. Therefore the glycaemic index of the fat-based confectionery composition may be lower than the glycaemic index of similar "full sugar" fat-based confectionery compositions, which may also provide a health benefit to consumers.

The inventors have determined that the amount of sugar in such fat-based confectionery compositions can be reduced to a greater extent than would be expected without significant impact on the properties, specifically the organoleptic properties, of the fat-based confectionery composition when including the crystalline oligosaccharide. In particular, the inventors have found that the use of crystalline oligosaccharides does not lead to the unappealing mouthfeel and/or rheological properties, i.e. a "gummy" or "sticky" mouthfeel which may result from the use of amorphous oligosaccharides or other soluble fibres. Therefore the fat-based confectionery composition suitably provides the same or similar smooth mouthfeel / texture which consumers expect of such fat-based confectionery compositions, for example "full sugar" fat-based confectionery compositions of the prior art.

Suitably the fat-based confectionery compositions of the first aspect comprising crystalline oligosaccharides have a lower viscosity in a limited water environment (such as an oral cavity or an experimental apparatus simulating the water content of an oral cavity) than a similar fat-based confectionery composition comprising an amorphous oligosaccharide, wherein the crystalline oligosaccharides and the comparative amorphous oligosaccharide have similar particle size and morphology. Suitably this lower viscosity manifests in a lower build-up in viscosity on exposure to the limited water environment, suitably as measured by a suitable apparatus.

The amount of sugar in the fat-based confectionery composition may be reduced by at least 10 %, suitably at least 15 %, suitably at least 20 %, suitably at least 25 %, suitably at least 30 %, by using a crystalline oligosaccharide in this way, compared to a reference 'full sugar' fat-based confectionery composition of the prior art. In some embodiments the sugar content of the fat-based confectionery composition may be reduced by at least 40 %, for example at least 45 % or at least 50 %. In some embodiments the sugar content of the fat-based confectionery composition may be reduced by at least 55 %, for example at least 60 % or at least 65 %, suitably at least 70 %, for example at least 75 %. In some embodiments the sugar content of the fat-based confectionery composition may be reduced by up to 100 %, for example up to 90 % or up to 80 %. In some embodiments, the sugar content of the fat-based confectionery composition may be reduced to zero (100 % reduction).

Suitably the fat-based confectionery composition of this first aspect has a sweet taste similar to a reference "full sugar" fat-based confectionery composition. Suitably said sweet taste is provided by the remaining sugar in the fat-based confectionery composition which may be supplemented to some extent by the crystalline oligosaccharide, which would be typically less sweet than the sugar (i.e. sucrose). The fat-based confectionery composition may or may not comprise intense sweeteners (e.g. aspartame, acesulfame-k, cyclamates, saccharin, sucralose, neohesperidin, dihydrochalone, alitame, stevia, steviol glycosides, monk fruit, mogrosides, glycyrrhizin or any combination thereof).

The fat-based confectionery composition of this first aspect may comprise sugar alcohols (e.g. sorbitol, xylitol, mannitol, lactitol, isomalt, or any combination thereof).

In some embodiments, the fat-based confectionery composition of this first aspect does not comprise sugar alcohols (e.g. sorbitol, xylitol, mannitol, lactitol, isomalt, or any combination thereof).

The fat-based confectionery composition may comprise polydextrose, inulin and sugar alcohols.

In some embodiments, the fat-based confectionery composition of this first aspect does not comprise polydextrose, inulin and sugar alcohols.

### Crystalline Oligosaccharide

An oligosaccharide is a saccharide polymer containing a small number of monosaccharides. Typically an oligosaccharide comprises three to ten monosaccharides. Polysaccharides typically comprise more than ten monosaccharides. Some oligosaccharides which are water soluble and not fully digestible may be referred to as "soluble fibres".

The oligosaccharide can be defined in terms of a degree of polymerisation (DP). Suitably the crystalline oligosaccharide of the first aspect of the present invention has a DP of from 3 to 10, for example of from 3 to 8 or from 3 to 6. In some embodiments the crystalline oligosaccharide has a DP of from 3 to 5. Suitably the crystalline oligosaccharide has a DP of 3 or 4. In some embodiments, the crystalline oligosaccharide has a DP of 3.

The crystalline oligosaccharide may be a mixture of a single oligosaccharides having different DPs or a mixture of different oligosaccharides.

Fructo oligosaccharide (FOS) is an oligosaccharide consisting of chains of fructose molecules. Galacto oligosaccharide (GOS) consists of chains of galactose molecules and xylo oligosaccharide (XOS) consists of chains of xylose molecules. These oligosaccharides are commercially available as mixtures of oligosaccharides, for example having a DP of from 3 to 10. The inventors have found that mixtures of different DPs tend not to crystallise and so such oligosaccharides, which may be commercially available, tend to be amorphous.

Crystalline oligosaccharides may be obtained by separating the mixtures of commercially available oligosaccharides into single DP fractions, followed by further isolation, purification and crystallisation. Processes to produce crystalline oligosaccharides have been disclosed in US 2008/202503 and US 8889637. Some high purity crystalline oligosaccharides can be purchased from chemical suppliers.

The crystalline oligosaccharide contained in the fat-based confectionery composition of this first aspect does not have a melting point below 60°C. Therefore the crystalline oligosaccharide may have a melting point of at least 60 °C or may not have a defined melting point at all. For example, the crystalline oligosaccharide may either sublime or decompose instead of melting. In such embodiments, the crystalline oligosaccharide suitably does not sublime or decompose below 60 °C. Suitably the crystalline oligosaccharide is stable at temperatures of below 60 °C. Specifically, the crystalline oligosaccharide does not melt, sublime or decompose at temperatures of below 60 °C.

Suitably the crystalline oligosaccharide has a melting point of at least 60°C. Some crystalline oligosaccharides suitable for use in the present invention do not have an accurate "true" melting point (i.e. a crystalline solid to liquid transition, involving no chemical change). Such crystalline oligosaccharides may have an "apparent" melting point (i.e. a change in crystalline structure that involves chemical change, such as dehydration/ desolvation of a hydrated/ solvated crystal, thermal decomposition, inversion; etc.). Therefore the term "melting point" used herein may refer to the "true" or "apparent" melting point of the crystalline oligosaccharide. Therefore, the first aspect of the present invention may additionally or alternatively provide a fat-based confectionery composition comprising a crystalline oligosaccharide, wherein the crystalline oligosaccharide has a true or apparent melting point of at least 60 °C and/or does not undergo physical or chemical change when heated to a temperature of at least 60 °C.

In some embodiments, the crystalline oligosaccharide comprises glucose, fructose or galactose and has a ("true" or "apparent") melting point of at least 60 °C.

In some embodiments, the crystalline oligosaccharide may be selected from any one or more of raffinose, stachyose, lactosucrose, 2'-fucosyl lactose, 3-fucosyl lactose, panose, maltotriose, isomaltotriose, gentianose, melezitose, cellotriose, levantriose, globotriose, nigerotriose, kojitriose, gentianose, erlose, laminaritriose, isopanose. mannotriose, xylotriose, xylotetrose, arabinotriose, planteose, verbascose, cellotetraose, xylotetraose and rhamninose or mixtures thereof. Further details of the above mentioned oligosaccharides is provided in Table 1.

**Table 1**

| **Common name** | **Linkage** | **DP** |
|---|---|---|
| Raffinose | Gal-(α1,6)-Glc-(α1,2)-Fru | 3 |
| Stachyose | Gal-(α1,6)-Gal-(α1,6)-Glc-(α1,2)-Fru | 4 |
| Lactosucrose | Gal-(β1,4)-Glc-(α1,2)-Fru | 3 |
| 2'-fucosyl lactose | Fuc-(α1,2)-Gal-(β1,4)-Glc | 3 |
| 3-fucosyl lactose | Fuc-(α1,3)-Gal-(β1,4)-Glc | 3 |
| Panose | Glc-(α1,6)-Glc-(α1,4)-Glc | 3 |
| Maltotriose | Glc-(α1,4)-Glc-(α1,4)-Glc | 3 |
| Isomaltotriose | Glc-(α1,6)-Glc-(α1,6)-Glc | 3 |
| Gentianose | Glc-(β1,6)-Glc-(α1,2)-Fru | 3 |
| Melezitose | Glc-(α1,3)-Fru-(β2,1)-Glc | 3 |
| Cellotriose | Glc-(β1,4)-Glc-(β1,4)-Glc | 3 |
| Levantriose | Fru-(β2,6)-Fru-(β2,6)-Fru | 3 |
| Globotriose | Glc-(α1,4)-Glc-(β1,4)-Glc | 3 |
| Nigerotriose | Glc-(α1,3)-Glc-(α1,3)-Glc | 3 |
| Kojitriose | Glc-(α1,2)-Glc-(α1,2)-Glc | 3 |
| Gentianose | Glc-(β1,6)-Glc-(β1,6)-Glc | 3 |
| Erlose | Glc-(α1,4)-Glc-(α1,2)-Fru | 3 |
| Laminaritriose | Glc-(β1,3)-Glc-(β1,3)-Glc | 3 |
| Isopanose | Glc-(α1,6)-Glc-(α1,4)-Glc | 3 |
| Mannotriose | Man-(β1,4)-Man-(β1,4)-Man | 3 |
| Xylotriose | Xyl-(β1,4)-Xyl-(β1,4)-Xyl | 3 |
| Xylotetraose | Xyl-(β1,4)-Xyl-(β1,4)-Xyl-(β1,4)-Xyl | 4 |
| Arabinotriose | Ara-(α1,5)-Ara-(α1,6)-Ara | 3 |
| Planteose | Gal-(α1,6)-Fru-(β2,1)-Glc | 3 |
| Verbascose | Gal-(α1,6)-Gal-(α1,6)-Gal-(α1,6)-Glc-(α1,2)-Fru | 5 |
| Cellotetraose | Glc-(β1,4)-Glc-(β1,4)-Glc-(β1,4)-Glc | 4 |
| Rhamninose | Rha-Rha-Gal (linkages unknown) | 3 |

In some embodiments, the crystalline oligosaccharide may be selected from 3-fucosyl lactose, panose, globotriose, nigerotriose, kojitriose, gentianose, erlose, laminaritriose, cellotetraose, isopanose, mannotriose, xylotriose, xylotetrose, planteose, centose, theanderose, rhamninose, arabinotriose, raffinose, stachyose, lactosucrose (otherwise known as lactosyl fructoside), 2'-fucosyl lactose, maltotriose, isomaltotriose, isomaltotetraose, gentianose, melezitose, cellotriose and levantriose or mixtures thereof.

In some embodiments, the crystalline oligosaccharide may be selected from raffinose, stachyose, lactosucrose (otherwise known as lactosyl fructoside), 2'-fucosyl lactose, maltotriose, isomaltotriose, isomaltotetraose, gentianose, melezitose, cellotriose and levantriose or mixtures thereof.

The crystalline oligosaccharide may be the crystalline version of a reduced calorie oligosaccharide (i.e. a crystalline soluble fibre, for example crystalline raffinose), or may be a fully caloric oligosaccharide in crystalline form (for example crystalline maltotriose). In some embodiments the crystalline oligosaccharide is a crystalline soluble fibre, which is suitably digestion resistant.

The crystalline structure of the oligosaccharide may be confirmed by thermoanalytical techniques. Suitably the crystalline structure may be confirmed using differential scanning calorimetry (DSC) or thermogravimetric analysis (TGA) or a combination of both. Such techniques are well known in the art.

Suitably the crystalline oligosaccharide is an oligosaccharide comprising galactose, glucose, xylose, mannose, arabinose or fucose, suitably as the predominant monomer of the oligosaccharide. Suitably the crystalline oligosaccharide is an oligosaccharide comprising galactose or glucose, suitably as the predominant monomer of the oligosaccharide. For example, the crystalline oligosaccharide may be a galacto-oligosaccharide (GOS) or a gluco-oligosaccharide. Suitably the crystalline oligosaccharide does not comprise fructose, suitably at least not as the predominant monomer of the oligosaccharide. For example, the crystalline oligosaccharide is suitably not a fructo-oligosaccharide (FOS), for example kestose or nistose. Such crystalline oligosaccharides may be derived from chicory root or Jerusalem artichokes. The crystalline oligosaccharide is suitably not derived from chicory root or Jerusalem artichokes. Such oligosaccharides comprising fructose as the predominant monomer may cause digestive problems in humans when consumed above certain amounts. Therefore such oligosaccharides may have disadvantages when used in foodstuffs such as fat-based confectionery products. Levantriose comprises fructose as the predominant monomer, however the β-2,6 linkages of levantriose are believed to increase digestion resistance and decrease the potential for causing human digestive problems compared to fructo-oligosaccharides. Therefore levantriose may be useful in the present invention.

Suitably the fat-based confectionery composition of this first aspect comprises a crystalline oligosaccharide selected from raffinose, melezitose, lactosucrose, 2' fucosyl lactose, gentianose or mixtures thereof.

Suitably the crystalline oligosaccharide is stable. By stable we mean that the crystalline oligosaccharide does not dissolve, sublime, decompose or lose crystallinity during processing, which typically takes place at temperatures below 60°C.

The fat-based confectionery composition of this first aspect comprises a crystalline oligosaccharide which does not have melting point below 60 °C. Additionally or alternatively, the crystalline oligosaccharide may be considered to be structurally stable at temperatures of up to 60 °C. In other words, the crystalline oligosaccharide suitably does not lose its crystalline form in the fat-based confectionery composition at temperatures of up to 60 °C, by melting or any other physical or chemical process.

Suitably the fat-based confectionery composition of this first aspect comprises a crystalline oligosaccharide having a melting point of at least 60°C, wherein the crystalline oligosaccharide is selected from raffinose, melezitose, lactosucrose, 2' fucosyl lactose, gentianose or mixtures thereof.

In some embodiments the fat-based confectionery composition comprises a crystalline oligosaccharide having a melting point of at least 60°C, wherein the crystalline oligosaccharide has a DP of from 3 to 5.

The fat-based confectionery composition suitably comprises at least 5 wt% crystalline oligosaccharide, for example at least 10 wt% or at least 15 wt% crystalline oligosaccharide. The fat-based confectionery composition suitably comprises up to 70 wt% crystalline oligosaccharide, suitably up to 60 wt% or up to 50 wt%. In some embodiments the fat-based crystalline oligosaccharide comprises from 5 wt% to 70 wt%, for example from 10 wt% to 60 wt% or from 15 wt% to 50 wt% crystalline oligosaccharide.

In some embodiments the fat-based confectionery composition comprises from 10 wt% to 40 wt% fat and from 5 wt% to 70 wt% crystalline oligosaccharide. Suitably the fat-based confectionery composition comprises from 20 wt% to 30 wt% fat and from 10 wt% to 55 wt% crystalline oligosaccharide.

### Sugar Content

The inclusion of a crystalline oligosaccharide in the fat-based confectionery composition of this first aspect suitably allows the amount of sugar in the fat-based confectionery composition to be reduced compared to an otherwise similar "full sugar" fat-based confectionery composition. This reduction in the amount of sugar is suitably achieved whilst retaining a taste and texture profile which is acceptable to consumers and is approximate to the taste and texture profile of a "full sugar" composition (comprising only sugar, e.g. sucrose, as the carbohydrate component).

The fat-based confectionery composition may comprise different sugars from different sources. This may be referred to as the total sugar content (total sugars) and is the value which may be displayed on a confectionery product to show a consumer the sugar content of the product. For example, the fat-based confectionery composition (e.g. a chocolate composition) may comprise sucrose, dextrose, glucose syrup solids, fructose, lactose and maltose or any combination thereof. The fat-based confectionery composition may comprise sugar derived from milk products, such as skimmed milk powder, for example lactose. However, the majority of the total sugar content of such a fat-based confectionery composition may be the sugar added as part of recipe, typically sucrose. This may be conveniently referred to as "added sugar".

The fat-based confectionery composition of this first aspect may comprise up to 55 wt% total sugars, suitably up to 52 wt%, suitably up to 50 wt%, suitably up to 48 wt%, for example up to 45 wt% total sugars.

The fat-based confectionery composition of this first aspect may comprise at least 10 wt% total sugars, suitably at least 12 wt%, suitably at least 14 wt%, for example at least 16 wt% total sugars.

For example, the fat-based confectionery composition may comprise 10% to 55 wt% total sugars, suitably from 10 to 50 wt%, suitably from 14 to 50 wt% total sugars.

These amounts of total sugar in the fat-based confectionery composition suitably represent a reduction in total sugar content compared to a reference 'full sugar' fat-based confectionery composition of the prior art. Suitably these amounts of total sugar represent a reduction of at least 10 % in total sugars, suitably at least 15 %, suitably at least 20 %, suitably at least 25 %, suitably at least 30 %, compared to a reference 'full sugar' fat-based confectionery composition of the prior art. In some embodiments the total sugar content of the fat-based confectionery composition may be reduced by at least 40 %, for example at least 45 % or at least 50 %. In some embodiments the total sugar content of the fat-based confectionery composition may be reduced by at least 55 %, for example at least 60 % or at least 65 %, suitably at least 70 %, for example at least 75 %. In some embodiments the total sugar content of the fat-based confectionery composition may be reduced by up to 100 %, for example up to 90 % or up to 80 %. In some embodiments, the added and/or total sugar content of the fat-based confectionery composition may be reduced to zero (100 % reduction).

Suitably the fat-based confectionery compositions of this first aspect comprise the crystalline oligosaccharide and a sugar, suitably sucrose, in a ratio of at least 1:10, suitably at least 1:8, suitably at least 1:6, suitably at least 1:4 or at least 1:2 or 1:1.

Suitably the fat-based confectionery composition comprises the crystalline oligosaccharide and a sugar, suitably sucrose, in a ratio of up to 10:1, suitably at up to 8:1, suitably up to 6:1, suitably up to 4:1 or approximately 3:1.

Suitably the fat-based confectionery composition comprises the crystalline oligosaccharide and a sugar, suitably sucrose, in a ratio of from 1:8 to 6:1, suitably of from 1:4 to 6:1, suitably of from 1:4 to 4:1.

### Chocolate Composition

In some embodiments, the fat-based confectionery composition is a chocolate composition. Therefore the first aspect of the present invention may provide a chocolate composition comprising a crystalline oligosaccharide, wherein the crystalline oligosaccharide does not have a melting point of below 60°C. Suitably the crystalline oligosaccharide has a melting point of at least 60°C.

The term 'chocolate' in the context of the present invention is not restricted by the various definitions of chocolate provided by government and regulatory bodies. A typical commercial dark chocolate will normally comprise non-fat cocoa solids, fat, sugar and emulsifier. A typical commercial milk chocolate will normally comprise non-fat cocoa solids, fat, milk solids, sugar and emulsifier. A typical commercial white chocolate will normally comprise milk solids, fat, sugar and emulsifier.

Suitably the chocolate composition of this embodiment comprises a cocoa-derived product, fat, sugar and the crystalline oligosaccharide. The crystalline oligosaccharide is suitably as described above.

The chocolate composition suitably comprises at least 5 wt% crystalline oligosaccharide, suitably at least 10 wt%, for example at least 12 wt% or at least 14 wt% crystalline oligosaccharide. The chocolate composition suitably comprises up to 40 wt% crystalline oligosaccharide, suitably up to 30 wt%, suitably up to 20 wt%, for example up to 18 wt% or up to 16 wt% crystalline oligosaccharide. In some embodiments the chocolate composition comprises from 5 to 40 wt% crystalline oligosaccharide, suitably from 5 to 30 wt%, for example from 5 to 30 wt%, from 10 to 30 wt% or from 10 wt% to 20 wt% crystalline oligosaccharide.

The reduction in sugar content of a fat-based confectionery composition discussed herein, which is made possible by the inclusion of the crystalline oligosaccharide, suitably applies to the total sugar content of the chocolate composition of this embodiment. As the majority of the sugar content of a chocolate composition is typically sucrose added during the chocolate making process (added sugar), it is suitably this sucrose which is reduced in the chocolate composition of this embodiment. Therefore in order to obtain such a chocolate composition, less sucrose is added during the chocolate making process compared to a known reference "full sugar" chocolate composition. Such known "full sugar" chocolate compositions may comprise 50 to 60 wt% total sugars and may comprise 45 to 55 wt% sucrose.

### Total Sugars

The chocolate composition may comprise sugar derived from milk products, such as skimmed milk powder, for example lactose. The following values refer to the total sugar content of the chocolate composition, including added sugar (sucrose) and sugar from the milk products, when present.

The chocolate composition may comprise up to 55 wt% total sugars, suitably up to 52 wt%, suitably up to 50 wt%, suitably up to 48 wt%, for example up to 45 wt% total sugars.

The chocolate composition may comprise at least 10 wt% total sugars, suitably at least 20 wt%, suitably at least 30 wt%, for example at least 40 wt% or at least 45 wt% total sugars.

For example, the fat-based confectionery composition may comprise 10% to 55 wt% total sugars, suitably from 20 to 55 wt%, suitably from 30 to 50 wt%, for example from 40 to 50 wt% total sugars. In some embodiments the chocolate composition may comprise from 45 to 55 wt%, suitably from 47 to 51 wt% total sugars.

### Added sugar

The following values refer to the added sugar content (e.g. sucrose) of the chocolate composition which does not include sugar from the milk products, when present.

The chocolate composition may comprise up to 65 wt% added sugar, suitably up to 60 wt%, suitably up to 55 wt%, suitably up to 50 wt% added sugar, suitably sucrose.

The chocolate composition may comprise at least 2 wt% added sugar, suitably at least 5 wt%, suitably at least 7 wt%, suitably at least 10 wt%, suitably at least 12 wt%, suitably at least 15 wt% added sugar, suitably sucrose.

For example, the chocolate composition may comprise from 10 to 60 wt% added sugar, suitably from 12 to 55 wt%, suitably from 15 to 50 wt% added sugar, suitably sucrose. In some embodiments, the chocolate composition comprises from 20 to 50 wt% added sugar, suitably from 25 to 50 wt% added sugar, for example from 30 to 45 wt% added sugar, suitably sucrose.

In some embodiments, the chocolate composition may comprise from 20 to 30 wt% added sugar, suitably from 22 to 30 wt%, suitably from 23 to 29 wt%, for example from 23 to 27 wt% added sugar, suitably sucrose.

The added sugar (e.g. sucrose) of the chocolate composition may be reduced by at least 10%, suitably at least 15 wt%, suitably at least 20%, suitably at least 30% compared to a known reference "full sugar" chocolate composition. In some embodiments, the added sugar content of the chocolate composition is suitably reduced by at least 35%, suitably at least 40%. In some embodiments, the added sugar (e.g. sucrose) of the fat-based confectionery composition may be reduced by approximately 50%, suitably at least 50%.

The chocolate confectionery composition suitably comprises from 5 to 30 wt% crystalline oligosaccharide and from 40 to 55 wt% total sugars.

Suitably the chocolate composition comprises 5 to 30 wt% crystalline oligosaccharide and from 20 to 50 wt% added sugar (e.g. sucrose).

### Cocoa-derived products

The chocolate composition of this embodiment suitably comprises a cocoa-derived product, fat, sugar and a crystalline oligosaccharide. Suitable cocoa-derived products include non-fat cocoa solids, cocoa liquor, cocoa mass and cocoa butter. Cocoa mass comprises non-fat cocoa solids and cocoa butter.

In some embodiments, the chocolate composition of this first aspect comprises cocoa solids, fat, sugar and a crystalline oligosaccharide. Suitably the cocoa solids are non-fat cocoa solids.

By non-fat cocoa solids we mean to refer to the component remaining after removal of fats from cocoa liquor.

Suitably the chocolate composition of this first aspect comprises cocoa mass, fat, sugar and a crystalline oligosaccharide.

In some embodiments the cocoa-derived product and the fat are both cocoa butter. In these embodiments the chocolate composition comprises cocoa butter, sugar and a crystalline oligosaccharide. Such a product may be a white chocolate. The chocolate composition comprising cocoa butter may comprise an additional fat.

In some embodiments the chocolate composition comprises cocoa mass, fat, sugar and a crystalline oligosaccharide. The fat may be a single fat or a combination of more than one fat.

Suitable fats include cocoa butter and cocoa butter alternatives.

Suitable cocoa butter alternatives include butterfat, a cocoa butter equivalent (CBE), a cocoa butter replacer (CBR), a cocoa butter substitute (CBS) (sometimes used interchangeably with CBR), a vegetable fat that is liquid at standard ambient temperature and pressure (SATP, 25°C and 100kPa) or any combination thereof.

CBEs are defined in Directive 2000/36/EC as complying with the following criteria:
a) they are non-lauric vegetable fats, which are rich in symmetrical monounsaturated triglycerides of the type POP, POSt and StOSt;
b) they are miscible in any proportion with cocoa butter, and are compatible with its physical properties (melting point and crystallisation temperature, melting rate, need for tempering phase); and
c) they are obtained only by the processes of refining and/or fractionation, which excludes enzymatic modification of the triglyceride structure.

Suitable CBEs include illipe, Borneo tallow, tengkawang, palm oil, sal, shea, kokum gurgi and mango kernel or synthetic CBEs such as COBERINE (RTM) produced by Loders Croklaan, The Netherlands. CBEs may be used in combination with cocoa butter.

Suitable CBSs (or CBRs) include CBS laurics and CBS non-laurics. CBS laurics are short-chain fatty acid glycerides. Their physical properties vary but they all have triglyceride configurations that make them compatible with cocoa butter. Suitable CBSs include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cottonseed, peanut, rapeseed and corn (maize) oil.

Suitable vegetable fats are liquid at standard ambient temperature and pressure (SATP, 25°C and 100kPa). A liquid vegetable fat may be employed when a liquid chocolate composition is desired. Suitable vegetable fats include corn oil, cotton seed oil, rapeseed oil, palm oil, safflower oil, and sunflower oil.

The present invention is further applicable to chocolate compositions in which some or all of the fat is constituted by a partly or wholly non-metabolisable fat, for example Caprenin or Olestra.

The chocolate composition of this embodiment suitably comprises a cocoa-derived product, fat, sugar and a crystalline oligosaccharide. The chocolate composition suitably comprises at least 10 wt% of a cocoa-derived product, suitably at least 13 wt%, suitably at least 16 wt%, for example at least 19 wt% of a cocoa-derived product.

The chocolate composition suitably comprises up to 35 wt% of a cocoa-derived product, suitably 32 wt%, for example up to 30 wt% of a cocoa-derived product.

The chocolate composition suitably comprises from 15 to 35 wt% of a cocoa-derived product, suitably from 20 to 30 wt%, for example from 25 to 30 wt% of a cocoa-derived product.

The chocolate composition suitably comprises at least 10 wt% of fat, suitably at least 12 wt%, suitably at least 13 wt%, for example at least 14 wt% of fat, suitably of added fat not including any fat present in a cocoa mass or cocoa liquor present in the chocolate composition. Suitably such added fat is provided by cocoa butter and/or cocoa butter alternatives.

The chocolate composition suitably comprises up to 22 wt% of fat, suitably up to 20 wt%, for example up to 18 wt% of fat, suitably of added fat as defined above, suitably of cocoa butter and/or cocoa butter alternatives.

The chocolate composition suitably comprises from 10 to 22 wt% of fat, suitably from 12 to 22 wt%, suitably from 14 to 20 wt%, for example from 14 to 18 wt% of fat, suitably of added fat as defined above, suitably of cocoa butter and/or cocoa butter alternatives.

The chocolate composition suitably comprises at least 25 wt% of total fat, suitably at least 27 wt%, suitably at least 29 wt%, for example at least 31 wt% of total fat. Total fat includes any fat present in a cocoa mass or cocoa liquor present in the chocolate composition.

The chocolate composition suitably comprises up to 60 wt% of total fat, suitably up to 50 wt% of total fat, suitably up to 45 wt%, suitably up to 40 wt%, for example up to 35 wt% of total fat.

In some embodiments wherein the chocolate composition is a milk chocolate composition, the total fat content is from 25 to 35 wt%, suitably from 27 to 32 wt%, suitably from 29 to 32 wt%, suitably from 29 to 30 wt%.

The chocolate composition of this embodiment may be a dark chocolate, a milk chocolate or a white chocolate composition.

In embodiments wherein the chocolate composition is a milk chocolate composition, the chocolate composition may comprise any one or more of cocoa liquor, cocoa powder, cocoa solids, cocoa butter, milk or milk powder, sugar and a crystalline oligosaccharide.

In some embodiments, the chocolate composition is a milk chocolate composition comprising cocoa mass, fat, milk products, sugar and a crystalline oligosaccharide. In some embodiments the milk products may be incorporated into the chocolate composition from a milk chocolate "crumb" comprising a cocoa-derived product such as cocoa mass or cocoa liquor, sucrose and milk solids, the milk solids being formed by condensing milk during the crumb making process. Suitably the crumb comprises all of the added sugar in the chocolate composition. Chocolate crumb making processes are known in the art.

In said embodiments, the chocolate composition suitably comprises at least 8 wt% of cocoa mass, suitably at least 9 wt%, for example at least 10 wt% of cocoa mass.

In said embodiments, the chocolate composition suitably comprises up to 15 wt% of cocoa mass, suitably 13 wt%, for example up to 12 wt% of cocoa mass.

In said embodiments, the chocolate composition suitably comprises from 8 to 14 wt% of cocoa mass, suitably from 9 to 13 wt%, for example from 9 to 11 wt% of cocoa mass.

In said embodiments, the fat may be present in the amounts referred to above.

Suitable milk products include skimmed milk powder, full cream milk powder, anhydrous milk fat, whey powder or a combination thereof. Suitably the milk products are milk powders selected from skimmed milk powder, full cream milk powder, whey powder or a combination thereof.

In said embodiments, the chocolate composition suitably comprises at least 8 wt% of milk products, suitably at least 9 wt%, for example at least 10 wt% of milk products.

In said embodiments, the chocolate composition suitably comprises up to 30 wt% of milk products, suitably 28 wt%, for example up to 26 wt% of milk products.

In said embodiments, the chocolate composition suitably comprises from 15 to 30 wt% of milk products, suitably from 20 to 28 wt%, for example from 23 to 27 wt% of milk products.

In said embodiments, the chocolate composition suitably comprises from 10 to 30 wt% of milk powders, suitably from 15 to 25 wt%, for example from 18 to 22 wt% of milk powders.

In said embodiments, the chocolate composition suitably comprises from 9 to 13 wt% cocoa mass, from 18 to 28 wt% milk products, from 14 to 20 wt% cocoa butter and/or cocoa butter alternatives, from 22 to 35 wt% added sugar, suitably sucrose, and from 10 to 25 wt% crystalline oligosaccharide.

In said embodiments, the chocolate composition suitably comprises from 9 to 13 wt% cocoa mass, from 18 to 28 wt% milk products, from 14 to 20 wt% cocoa butter and/or cocoa butter alternatives, from 36 to 48 wt% total sugars and from 10 to 25 wt% crystalline oligosaccharide.

In some embodiments, the chocolate composition suitably comprises from 9 to 12 wt% cocoa mass, from 23 to 28 wt% milk products, from 16 to 19 wt% cocoa butter and/or cocoa butter alternatives, from 30 to 36 wt% added sugar, suitably sucrose, and from 10 to 20 wt% crystalline oligosaccharide.

In said embodiments, the chocolate composition suitably comprises from 9 to 12 wt% cocoa mass, from 23 to 28 wt% milk products, from 16 to 19 wt% cocoa butter and/or cocoa butter alternatives, from 43 to 49 wt% total sugars and from 10 to 20 wt% crystalline oligosaccharide.

Said chocolate compositions suitably also comprise emulsifiers and flavourings, as discussed herein.

The chocolate composition may be moulded or extruded to form a bar (filled or solid). The chocolate composition may be moulded or deposited to form a solid or a filled chocolate which may be of single mouthful size, or may take the form of vermicelli chocolate, chocolate flakes or gianduja nut chocolate derived from any of such chocolate types. Alternatively, the chocolate composition may be used as a coating chocolate.

The chocolate composition may further include flavourings, especially those traditionally associated with chocolate, such as vanilla, orange and mint.

Suitable flavourings include cocoa powder, fruit concentrates, spices, hazelnut paste, orange essence, mint essence, coffee, and vanillin.

The chocolate composition may comprise, consist or consist essentially of a cocoa-derived product, fat, milk solids, crystalline oligosaccharide, sugar and optionally emulsifiers, suitably in the amounts discussed above.

The chocolate composition may comprise, consist or consist essentially of a cocoa-derived product, fat, milk solids, crystalline oligosaccharide, sugar, optionally emulsifiers and optionally flavourings, suitably in the amounts discussed above.

The chocolate composition may be a crumb-based chocolate. Chocolate crumb may be prepared from milk, cocoa liquor and sugar. A typical crumb used to make milk chocolate may comprise 56 to 59 wt% sucrose, 10 to 15 wt% cocoa liquor, 25 to 35 wt% milk solids and approximately 1 wt% moisture. The crystalline oligosaccharide can be added to the chocolate crumb and then processed as usual to form the final chocolate product.

The chocolate composition may be a non-crumb based chocolate, e.g. based on skimmed milk powder (SMP).

In some embodiments, the chocolate composition comprises a cocoa-derived product, from 10 to 25 wt% fat, suitably added fat, suitably cocoa butter and/or cocoa butter alternatives, from 30 to 40 wt% added sugar, suitably sucrose, and from 5 to 30 wt% crystalline oligosaccharide.

In some embodiments, the chocolate composition comprises a cocoa-derived product, from 26 to 42 wt% total fat, from 30 to 40 wt% added sugar, suitably sucrose and from 5 to 30 wt% crystalline oligosaccharide.

In some embodiments, the chocolate composition comprises a cocoa-derived product, from 10 to 25 wt% fat, suitably added fat, suitably cocoa butter and/or cocoa butter alternatives, from 30 to 50 wt% total sugars and from 5 to 30 wt% crystalline oligosaccharide.

In some embodiments, the chocolate composition comprises a cocoa-derived product, from 26 to 42 wt% total fat, from 30 to 50 wt% total sugars and from 5 to 30 wt% crystalline oligosaccharide.

In some embodiments, the chocolate composition comprises a cocoa-derived product, from 10 to 25 wt% fat, suitably added fat, suitably cocoa butter and/or cocoa butter alternatives, from 30 to 50 wt% total sugars and from 10 to 20 wt% crystalline oligosaccharide.

In some embodiments, the chocolate composition comprises a cocoa-derived product, from 26 to 42 wt% total fat, from 30 to 50 wt% total sugars and from 10 to 20 wt% crystalline oligosaccharide.

Those skilled in the arts of chocolate formulation and manufacture will also understand that a milk chocolate can be made via a chocolate crumb intermediate comprising some or all of the sugar, cocoa mass, cocoa butter, milk powders and or milk fat.

Additionally those skilled in the arts of chocolate formulation and manufacture will also understand that the recipes can be further adjusted to include vegetable fats and edible matter, such as whey powder, where regulations permit it.

In some embodiments, the chocolate composition may be a chocolate filling composition, for example for use inside a chocolate shell or a baked good, such as a biscuit, a pastry or a cake.

Suitably the chocolate compositions of this embodiment obtain the stated reduction in sugar content whilst maintaining organoleptic properties similar to a reference "full sugar" chocolate composition and which are acceptable to consumers. The inventors have determined that the amount of sugar in such chocolate compositions can be reduced to a greater extent than would be expected without significant impact on the properties, specifically the organoleptic properties, of the chocolate composition when including the crystalline oligosaccharide. In particular, the inventors have found that the use of crystalline oligosaccharides does not lead to the unappealing mouthfeel and/or rheological properties, i.e. a "gummy" or "sticky" mouthfeel which may result from the use of amorphous oligosaccharides or other soluble fibres. Therefore the chocolate composition suitably provides the same or similar smooth mouthfeel / texture which consumers expect of such chocolate compositions, for example "full sugar" chocolate compositions of the prior art.

The filing compositions of the present may also have a similar sweet taste to known "full sugar" filling compositions, optionally with the addition of an intense sweetener where required, or may have a reduced sweetness when an intense sweetener or any sucrose or similar bulk sweetener is not present.

### No Added Sugar Chocolate Composition

In some embodiments, the added sugar content of the chocolate composition may be reduced to zero (100 % reduction). Therefore the first aspect of the present invention may provide a chocolate composition comprising a crystalline oligosaccharide, wherein the crystalline oligosaccharide does not have a melting point of below 60°C, and no added sugar, for example no added sucrose. This chocolate composition may be termed a 100% sugar-replaced chocolate.

Suitably the chocolate composition of this embodiment comprises a cocoa-derived product, fat and the crystalline oligosaccharide. The crystalline oligosaccharide is suitably as described above.

The chocolate composition suitably comprises at least 30 wt% crystalline oligosaccharide, suitably at least 35 wt%, for example at least 40 wt% or at least 45 wt% crystalline oligosaccharide.

The chocolate composition suitably comprises up to 60 wt% crystalline oligosaccharide, suitably up to 55 wt%, suitably up to 50 wt%.

In some embodiments the chocolate composition comprises from 30 to 60 wt% crystalline oligosaccharide, suitably from 35 to 55 wt%, for example from 40 to 55 wt%, from 45 to 52 wt% or from 48 wt% to 52 wt% crystalline oligosaccharide. The chocolate composition may suitably comprise approximately 49 or 50 wt% crystalline oligosaccharide.

### Total Sugars

As described above, the chocolate composition of this embodiment may comprise sugar derived from milk products, such as skimmed milk powder, for example lactose. The following values refer to the total sugar content of the chocolate composition, for example sugar from the milk products, when present.

The chocolate composition may comprise up to 15 wt% total sugars, suitably up to 12 wt%, suitably up to 10 wt% total sugars.

The chocolate composition may comprise at least 5 wt% total sugars, suitably at least 6 wt%, suitably at least 8 wt% total sugars.

For example, the fat-based confectionery composition may comprise from 5 to 15 wt% total sugars, suitably from 6 to 12 wt%, suitably from 8 to 10 wt% total sugars. In some embodiments the chocolate composition may comprise approximately 9 wt% total sugars.

### Added sugar

As discussed above, the chocolate composition of this embodiment suitably contains no added sugar such as sucrose and therefore the only sugar present is from the ingredients discussed above.

### Cocoa-derived products

The chocolate composition of this embodiment suitably comprises a cocoa-derived product, fat and a crystalline oligosaccharide. Suitable cocoa-derived products include non-fat cocoa solids, cocoa liquor, cocoa mass and cocoa butter. Cocoa mass comprises non-fat cocoa solids and cocoa butter.

In some embodiments, the chocolate composition of this first aspect comprises cocoa solids, fat and a crystalline oligosaccharide. Suitably the cocoa solids are non-fat cocoa solids.

Suitably the chocolate composition of this first aspect comprises cocoa mass, fat and a crystalline oligosaccharide.

In some embodiments the cocoa-derived product and the fat are both cocoa butter. In these embodiments the chocolate composition comprises cocoa butter and a crystalline oligosaccharide. Such a product may be a white chocolate. The chocolate composition comprising cocoa butter may comprise an additional fat.

In some embodiments the chocolate composition comprises cocoa mass, fat and a crystalline oligosaccharide. The fat may be a single fat or a combination of more than one fat.

Suitable fats and cocoa butter alternatives are as discussed above.

The chocolate composition of this embodiment suitably comprises a cocoa-derived product, fat and a crystalline oligosaccharide. The chocolate composition suitably comprises at least 10 wt% of a cocoa-derived product, suitably at least 13 wt%, suitably at least 16 wt%, for example at least 19 wt% of a cocoa-derived product.

The chocolate composition suitably comprises up to 35 wt% of a cocoa-derived product, suitably 32 wt%, for example up to 30 wt% of a cocoa-derived product.

The chocolate composition suitably comprises from 15 to 35 wt% of a cocoa-derived product, suitably from 20 to 30 wt%, for example from 25 to 30 wt% of a cocoa-derived product.

The chocolate composition suitably comprises at least 10 wt% of fat, suitably at least 12 wt%, suitably at least 13 wt%, for example at least 14 wt% of fat, suitably of added fat not including any fat present in a cocoa mass or cocoa liquor present in the chocolate composition. Suitably such added fat is provided by cocoa butter and/or cocoa butter alternatives.

The chocolate composition suitably comprises up to 25 wt% of fat, suitably up to 22 wt%, for example up to 20 wt% of fat, suitably of added fat as defined above, suitably of cocoa butter and/or cocoa butter alternatives.

The chocolate composition suitably comprises from 10 to 25 wt% of fat, suitably from 12 to 25 wt%, suitably from 14 to 22 wt%, for example from 16 to 21 wt% of fat, suitably of added fat as defined above, suitably of cocoa butter and/or cocoa butter alternatives.

The chocolate composition suitably comprises at least 25 wt% of total fat, suitably at least 27 wt%, suitably at least 29 wt%, for example at least 31 wt% of total fat. Total fat includes any fat present in a cocoa mass or cocoa liquor present in the chocolate composition.

The chocolate composition suitably comprises up to 60 wt% of total fat, suitably up to 50 wt% of total fat, suitably up to 45 wt%, suitably up to 40 wt%, for example up to 35 wt% of total fat.

In some embodiments wherein the chocolate composition is a milk chocolate composition, the total fat content is from 25 to 35 wt%, suitably from 27 to 32 wt%, suitably from 29 to 32 wt%, suitably from 29 to 30 wt%.

The chocolate composition of this embodiment may be a dark chocolate, a milk chocolate or a white chocolate composition.

In embodiments wherein the chocolate composition is a milk chocolate composition, the chocolate composition may comprise milk or milk powder and a crystalline oligosaccharide and any one or more of cocoa liquor, cocoa powder, cocoa solids or cocoa butter.

In some embodiments, the chocolate composition is a milk chocolate composition comprising cocoa mass, fat, milk products and a crystalline oligosaccharide. In some embodiments the milk products may be incorporated into the chocolate composition from a milk chocolate "crumb" comprising a cocoa-derived product such as cocoa mass or cocoa liquor and milk solids, the milk solids being formed by condensing milk during the crumb making process. Chocolate crumb making processes are known in the art.

In said embodiments, the chocolate composition suitably comprises at least 8 wt% of cocoa mass, suitably at least 9 wt%, for example at least 10 wt% of cocoa mass.

In said embodiments, the chocolate composition suitably comprises up to 15 wt% of cocoa mass, suitably 13 wt%, for example up to 12 wt% of cocoa mass.

In said embodiments, the chocolate composition suitably comprises from 8 to 14 wt% of cocoa mass, suitably from 9 to 13 wt%, for example from 9 to 12 wt% of cocoa mass.

In said embodiments, the fat may be present in the amounts referred to above.

Suitable milk products include skimmed milk powder, full cream milk powder, anhydrous milk fat, whey powder or a combination thereof. Suitably the milk products are milk powders selected from skimmed milk powder, full cream milk powder, whey powder or a combination thereof.

In said embodiments, the chocolate composition suitably comprises at least 10 wt% of milk products, suitably at least 15 wt%, for example at least 17 wt% of milk products.

In said embodiments, the chocolate composition suitably comprises up to 30 wt% of milk products, suitably 25 wt%, for example up to 20 wt% of milk products.

In said embodiments, the chocolate composition suitably comprises from 12 to 25 wt% of milk products, suitably from 15 to 22 wt%, for example from 17 to 20 wt% of milk products.

In said embodiments, the chocolate composition suitably comprises from 9 to 13 wt% cocoa mass, from 15 to 22 wt% milk products, from 14 to 22 wt% cocoa butter and/or cocoa butter alternatives and from 40 to 55 wt% crystalline oligosaccharide, and suitably no added sugar, for example sucrose.

In said embodiments, the chocolate composition suitably comprises from 9 to 13 wt% cocoa mass, from 15 to 22 wt% milk products, from 14 to 22 wt% cocoa butter and/or cocoa butter alternatives, from 40 to 55 wt% crystalline oligosaccharide and from 6 to 12 wt% total sugars, and suitably no added sugar, for example sucrose.

In said embodiments, the chocolate composition suitably comprises from 9 to 13 wt% cocoa mass, from 17 to 20 wt% milk products, from 16 to 21 wt% cocoa butter and/or cocoa butter alternatives and from 48 wt% to 52 wt% crystalline oligosaccharide, and suitably no added sugar, for example sucrose.

In said embodiments, the chocolate composition suitably comprises from 9 to 13 wt% cocoa mass, from 17 to 20 wt% milk products, from 16 to 21 wt% cocoa butter and/or cocoa butter alternatives, from 48 wt% to 52 wt% crystalline oligosaccharide and from 8 to 10 wt% total sugars, and suitably no added sugar, for example sucrose.

Said chocolate compositions suitably also comprise emulsifiers and flavourings, as discussed herein.

The chocolate composition may be moulded or extruded to form a bar (filled or solid). The chocolate composition may be moulded or deposited to form a solid or a filled chocolate which may be of single mouthful size, or may take the form of vermicelli chocolate, chocolate flakes or gianduja nut chocolate derived from any of such chocolate types. Alternatively, the chocolate composition may be used as a coating chocolate.

The chocolate composition may further include flavourings, especially those traditionally associated with chocolate, such as vanilla, orange and mint.

Suitable flavourings include cocoa powder, fruit concentrates, spices, hazelnut paste, orange essence, mint essence, coffee, and vanillin.

The chocolate composition may comprise, consist or consist essentially of a cocoa-derived product, fat, milk solids, crystalline oligosaccharide and optionally emulsifiers, suitably in the amounts discussed above.

In some embodiments, the chocolate composition comprises a cocoa-derived product, from 10 to 25 wt% fat, suitably added fat, suitably cocoa butter and/or cocoa butter alternatives, from 40 to 55 wt% crystalline oligosaccharide and from 6 to 12 wt% total sugars, and suitably no added sugar, for example sucrose. Suitably the chocolate composition is a milk chocolate composition s described above.

In some embodiments, the chocolate composition comprises a cocoa-derived product, from 26 to 42 wt% total fat, from 40 to 55 wt% crystalline oligosaccharide and from 6 to 12 wt% total sugars, and suitably no added sugar, for example sucrose. Suitably the chocolate composition is a milk chocolate composition s described above.

The chocolate composition may comprise, consist or consist essentially of a cocoa-derived product, fat, milk solids, crystalline oligosaccharide, optionally emulsifiers and optionally flavourings, suitably in the amounts discussed above.

Additionally those skilled in the arts of chocolate formulation and manufacture will also understand that the recipes can be further adjusted to include vegetable fats and edible matter, such as whey powder, where regulations permit it.

In some embodiments, the chocolate composition may be a chocolate filling composition, for example for use inside a chocolate shell or a baked good, such as a biscuit, a pastry or a cake.

Suitably the chocolate compositions of this embodiment obtain the stated reduction in sugar content whilst maintaining organoleptic properties similar to a reference "full sugar" chocolate composition and which are acceptable to consumers. The inventors have determined that the amount of sugar in such chocolate compositions can be reduced to a greater extent than would be expected without significant impact on the properties, specifically the organoleptic properties, of the chocolate composition when including the crystalline oligosaccharide. In particular, the inventors have found that the use of crystalline oligosaccharides does not lead to the unappealing mouthfeel and/or rheological properties, i.e. a "gummy" or "sticky" mouthfeel which may result from the use of amorphous oligosaccharides or other soluble fibres. Therefore the chocolate composition suitably provides the same or similar smooth mouthfeel / texture which consumers expect of such chocolate compositions, for example "full sugar" chocolate compositions of the prior art.

The chocolate compositions of the present invention may also have a similar sweet taste to known "full sugar" filling compositions, optionally with the addition of an intense sweetener where required, or may have a reduced sweetness when an intense sweetener or any sucrose or similar bulk sweetener is not present.

### Filling Composition

In some embodiments, the fat-based confectionery composition is a filling composition. Therefore the first aspect of the present invention may provide a filling composition comprising a crystalline oligosaccharide, wherein the crystalline oligosaccharide has a melting point of at least 60 °C. The filling composition may be additionally or alternatively defined as a fat-based filling composition.

In some embodiments the filling composition is used to sandwich two slabs of confectionery product together, for example slabs of biscuit or cake. Suitably the filling has a smooth, paste-like texture. Suitably the filling composition may be referred to as a cream, crème or creme.

The fat-based confectionery filling composition of this embodiment is not a "chocolate" as defined above. The fat-based confectionery filling composition may comprise some chocolate products, for example cocoa solids or chocolate flavouring, but does not form what the skilled person would consider to be a chocolate.

In some embodiments, the filling composition is a non-chocolate-based filling composition. In such embodiments, the filling composition suitably does not comprise a cocoa-derived product.

Suitably the filling composition comprises a fat, the crystalline oligosaccharide and sugar, suitably sucrose. Suitably the fat, crystalline oligosaccharide and sugar are well mixed to provide a homogeneous filling composition, suitably wherein the fat provides a continuous fat phase in which the crystalline oligosaccharide and sugar are dispersed.

The fat in the filling composition may be any suitable edible fat or oil, as described herein, such as the fats and oils typically used to prepare such fat-based confectionery compositions. For example, the fat may be a vegetable fat. In some embodiments, the fat may be a lauric fat, for example an oil such as coconut oil and/or palm kernel oil. In some embodiments the fat-based confectionery composition comprises hydrogenated palm kernel oil. In some embodiments the fat-based confectionery composition comprises fractionated palm kernel oil.

In some embodiments, the fat may be a non-lauric fat, which can be classified as either temper or non-temper. Suitable temper non-lauric fats include fractionated palm and shea butter and palm oil. For example, the fat may be a low-trans or no-trans fat. Suitably the fat is selected from partially and fully hydrogenated edible fats and oils, inter-esterified fats, hard-stock fats or fractionated fats. Suitably the fats may be sourced from animal, dairy, microbial, algal or vegetable based sources. Suitably the fat is palm fat.

The fat may be provided by a mixture of more than one fat or oil.

Suitably the filling composition comprises at least 3 wt% fat, suitably at least 5 wt%, suitably at least 10 wt% fat, for example at least 20 wt% or at least 30 wt% fat. Suitably the filling composition comprises up to 60 wt% fat, for example up to 50 wt% or up to 40 wt% fat. Suitably the filling composition comprises from 10 wt% to 60 wt% fat, suitably from 20 wt% to 50 wt% fat, for example from 25 wt% to 40 wt% fat or from 25 wt% to 35 wt% fat.

Said filling compositions may comprise emulsifiers and flavourings. Suitable flavourings may include chocolate, such as vanilla, orange and mint. Suitable flavourings include cocoa powder, fruit concentrates, spices, hazelnut paste, orange essence, mint essence, coffee, and vanillin.

The crystalline oligosaccharide is suitably as described above.

The filling composition suitably comprises at least 5 wt% crystalline oligosaccharide, suitably at least 10 wt%, for example at least 12 wt% or at least 14 wt% crystalline oligosaccharide.

Suitably the filling composition comprises at least 30 wt% crystalline oligosaccharide, suitably at least 40 wt%, suitably at least 45 wt% crystalline oligosaccharide, for example approximately 50 wt% crystalline oligosaccharide.

The filling composition suitably comprises up to 75 wt% crystalline oligosaccharide, suitably up to 70 wt%, suitably up to 65 wt%, suitably up to 60 wt%, for example up to 55 wt% crystalline oligosaccharide.

In some embodiments the filling composition comprises from 15 to 75 wt%, suitably from 15 to 70 wt%, suitably from 25 to 60 wt%, for example from 40 to 55 wt% or from 45 wt% to 55 wt% crystalline oligosaccharide.

Suitably the filling composition comprises from 25 wt% to 40 wt% fat and 15 to 75 wt% of the crystalline oligosaccharide. Suitably the filling composition comprises from 25 wt% to 40 wt% palm fat and from 60 to 75 wt% of the crystalline oligosaccharide.

Suitably the filling composition comprises from 25 wt% to 40 wt% fat and 15 to 60 wt% of the crystalline oligosaccharide. Suitably the filling composition comprises from 25 wt% to 40 wt% palm fat and from 40 to 60 wt% of the crystalline oligosaccharide.

Suitably the filling composition comprises from 25 wt% to 40 wt% fat, a sugar and 15 to 60 wt% of the crystalline oligosaccharide.

Suitably the filling composition comprises from 25 wt% to 40 wt% fat, a sugar and 40 to 60 wt% of the crystalline oligosaccharide.

Suitably the filling composition comprises from 25 wt% to 40 wt% fat and 60 to 75 wt% of the crystalline oligosaccharide.

As discussed above, the filling composition may be considered to comprise carbohydrates which include the sugar and the crystalline oligosaccharide. Suitably the filling composition comprises at least 40 wt% carbohydrates, suitably at least 45 wt%, suitably at least 50 wt%, for example at least 55 wt% or at least 60 wt% carbohydrates. Suitably the fat-based confectionery composition comprises up to 80 wt% carbohydrates, suitably up to 75 wt%, suitably up to 70 wt% or up to 67 wt% carbohydrates.

Suitably the filling composition comprises from 50 wt% to 80 wt% carbohydrates, suitably from 50 wt% to 70 wt% carbohydrates, suitably from 55 wt% to 70 wt%, carbohydrates suitably from 60 wt% to 70 wt% carbohydrates.

Suitably the filling composition comprises at least 5 wt% sugar, suitably at least 10 wt%, suitably at least 12 wt% or at least 15 wt% sugar, suitably sucrose. Suitably the filling composition comprises up to 55 wt% sugar, suitably up to 50 wt%, suitably up to 40 wt%, for example up to 30 wt%, suitably up to 25 wt% or up to 20 wt% sugar, suitably sucrose. Suitably the filling composition comprises from 5 to 55 wt% sugar, suitably from 10 to 40 wt%, for example from 10 to 30 wt% or from 10 to 20 wt% sugar, suitably sucrose.

Suitably the filling composition comprises from 25 to 40 wt% fat, from 15 to 60 wt% of the crystalline oligosaccharide and from 5 to 55 wt% sugar, suitably sucrose.

Suitably the filling composition comprises from 25 to 40 wt% fat, from 40 to 60 wt% of the crystalline oligosaccharide and from 5 to 25 wt% sugar, suitably sucrose.

Suitably the filling composition comprises the crystalline oligosaccharide and a sugar, suitably sucrose, in a ratio of at least 1:6, suitably at least 1:5, suitably at least 1:4 or at least 1:2 or 1:1.

Suitably the filling composition comprises the crystalline oligosaccharide and a sugar, suitably sucrose, in a ratio of up to 10:1, suitably at up to 8:1, suitably up to 6:1, suitably up to 4:1 or approximately 3:1.

Suitably the filling composition comprises the crystalline oligosaccharide and a sugar, suitably sucrose, in a ratio of from 1:8 to 6:1, suitably of from 1:4 to 6:1, suitably of from 1:4 to 4:1.

In some embodiments the filling composition does not comprise any sugar.

These amounts of sugar in the filling composition suitably represent a reduction in sugar content compared to a reference 'full sugar' composition of the prior art. Suitably these amounts of sugar represent a reduction of at least 10 % in sugar, suitably at least 15 %, suitably at least 20 %, suitably at least 25 %, suitably at least 30 %, compared to a reference 'full sugar' filling composition of the prior art. In some embodiments the sugar content of the filling composition may be reduced by at least 40 %, for example at least 45 % or at least 50 %. In some embodiments the sugar content of the filling composition may be reduced by at least 55 %, for example at least 60 % or at least 65 %, suitably at least 70 %, for example at least 75 %. In some embodiments the sugar content of the filling composition may be reduced by up to 100 %, for example up to 90 % or up to 80 %. In some embodiments, the sugar content of the filling composition may be reduced to zero (100 % reduction).

Suitably the filling compositions of this embodiment obtain the stated reduction in sugar content whilst maintaining organoleptic properties similar to a reference "full sugar" filling composition and which are acceptable to consumers. The inventors have determined that the amount of sugar in such filling compositions can be reduced to a greater extent than would be expected without significant impact on the properties, specifically the organoleptic properties, of the filling composition when including the crystalline oligosaccharide. In particular, the inventors have found that the use of crystalline oligosaccharides does not lead to the unappealing mouthfeel and/or rheological properties, i.e. a "gummy" or "sticky" mouthfeel which may result from the use of amorphous oligosaccharides or other soluble fibres. Therefore the filling composition suitably provides the same or similar smooth mouthfeel / texture which consumers expect of such filling compositions, for example "full sugar" filling compositions of the prior art.

The filing compositions of the present invention may also have a similar sweet taste to known "full sugar" filling compositions, optionally with the addition of an intense sweetener where required, or may have a reduced sweetness when an intense sweetener or any sucrose or similar bulk sweetener is not present.

According to a second aspect of the present invention there is provided a fat-based confectionery filling composition comprising a crystalline oligosaccharide.

The fat-based confectionery filling composition of this second aspect may have any of the suitable features and advantages of the filling composition embodiment of the first aspect described above and may have any of the suitable features and advantages of the fat-based confectionery composition of the first aspect, where appropriate.

The fat-based confectionery filling composition of this second aspect is not a "chocolate" as defined above. The fat-based confectionery filling composition may comprise some chocolate products, for example cocoa solids or chocolate flavouring, but does not form what the skilled person would consider to be a chocolate.

Suitably the fat-based confectionery filling composition of this second aspect is not a chocolate composition and comprises from 25 to 40 wt% fat, from 40 to 60 wt% of the crystalline oligosaccharide and from 5 to 25 wt% sugar, suitably sucrose.

Suitably the fat-based confectionery filling composition of this second aspect is not a chocolate composition and comprises from 25 to 40 wt% fat, from 60 to 75 wt% of the crystalline oligosaccharide and no sugar, for example no sucrose.

In some embodiments, the filling composition of this second aspect is a non-chocolate-based filling composition. In such embodiments, the filling composition suitably does not comprise a cocoa-derived product.

Suitably the fat-based confectionery filling composition of this second aspect is a non-chocolate-based filling composition and comprises from 25 to 40 wt% fat, from 40 to 60 wt% of the crystalline oligosaccharide and from 5 to 25 wt% sugar, suitably sucrose.

### Method of preparing a fat-based confectionery composition

According to a third aspect of the present invention, there is provided a method for the production of the fat-based confectionery composition, the method comprising the steps of:
a) combining a fat and a crystalline oligosaccharide; and
b) processing the mixture obtained in step (a) to form a fat-based confectionery composition.

Suitably step (a) involves mixing a sugar with the fat and the crystalline oligosaccharide.

Suitably the steps of the method of this third aspect are carried out in the order step (a) followed by step (b).

The fat-based confectionery composition may be according to the first aspect of the present invention or may be a fat-based confectionery filling composition according to the second aspect of the present invention.

Suitably the fat, crystalline oligosaccharide and sugar are as described in relation to the first aspect. Suitably the crystalline oligosaccharide has a melting point of at least 60 °C.

Suitably, the method of this third aspect is based on a standard, known process for making fat-based confectionery compositions, wherein the normal addition of sucrose in the fat-based confectionery composition has been replaced, at least in part, by the addition of a crystalline oligosaccharide. The present invention may therefore provide a method for making a reduced sugar and/or reduced calorie fat-based confectionery composition using known processes and equipment. This provides the advantage that the investment in new processes and equipment required to produce the fat-based confectionery composition of the present invention is minimised and therefore may be implemented in a cost-effective manner.

In some embodiments, the fat-based confectionery composition is a chocolate composition. In such embodiments, step (a) involves mixing a fat with a cocoa-derived product, sugar and the crystalline oligosaccharide. Step (a) may involve forming a crumb comprising at least a part of the cocoa-derived product, at least a part of the sugar and milk products, suitably milk solids. Suitably the crumb comprises all of the added sugar in the chocolate composition. The crumb may comprise the crystalline oligosaccharide. Alternatively, step (a) may involve forming the crumb comprising at least a part of the cocoa-derived product, the sugar and milk products and then adding the oligosaccharide and suitably the fat to the crumb to form the mixture which is processed in step (b).

Step (a) may involve admixing any further ingredients present in the chocolate composition to the cocoa-derived product, sugar and the crystalline oligosaccharide and/or the crumb, for example additional cocoa-derived products, fats, additional milk products such as milk powders, emulsifiers and flavourings.

Suitably step (b) of processing the mixture may comprise pasting, refining, tempering and/or conching.

In some embodiments, step (a) involves providing a base chocolate mass and combining the base chocolate mass with the crystalline oligosaccharide. In such embodiments, the crystalline oligosaccharide may replace the additional sugar which is added to the base chocolate mass at this point in a standard manufacturing process for a "full sugar" chocolate composition.

In some embodiments, the fat-based confectionery composition is a filling composition.

In said embodiments, step (b) of processing the mixture suitably involves mixing at high speed.

Suitably step (b) involves mixing the mixture obtained in step (a) in a suitable apparatus at above 2000 rpm, for example at 2200 rpm or 2300 rpm, suitably at 2400 rpm.

According to a fourth aspect of the present invention, there is provided the use of a crystalline oligosaccharide in a fat-based confectionery composition for reducing the total sugars of said fat-based confectionery composition.

Suitably the use of a crystalline oligosaccharide involves replacing sugar, suitably sucrose in the fat-based confectionery composition.

Suitably the reduction in total sugars is in reference to a known fat-based confectionery composition which does not comprise a crystalline oligosaccharide, for example a 'full sugar' fat-based confectionery composition.

Suitably the use of this fourth aspect achieves a reduction in the amount of total sugars present in the fat-based confectionery composition of at least 10%, suitably at least 15%, suitably at least 20%, suitably at least 25%, suitably at least 30%, compared to a reference "full sugar" fat-based confectionery composition of the prior art. In some embodiments the total sugars of the fat-based confectionery composition may be reduced by at least 40 %, for example at least 45% or at least 50%. In some embodiments the total sugars of the fat-based composition may be reduced by at least 55%, for example at least 60% or at least 65%, suitably at least 70%, for example at least 75%.

Suitably the use of this fourth aspect may also provide a reduction in calorific content of the fat-based confectionery composition achieved by reducing the total sugar content of the fat-based confectionery composition. The reduction in calorific content may be in the range of from 1 to 20%, suitably from 3 to 10%, suitably from 5 to 10%.

The crystalline oligosaccharide and fat-based confectionery composition of this fourth aspect may have any of the suitable features and advantages described above in relation to the first and second aspects.

According to a fifth aspect of the present invention there is provided the use of a crystalline oligosaccharide to improve the mouthfeel of said fat-based confectionery composition. Suitably the fat-based confectionery composition has an acceptable mouthfeel and/or rheological properties, i.e. a "non-gummy" or "non-sticky" mouthfeel (suitably evaluated organoleptically), suitably compared to an otherwise identical fat-based confectionery composition comprising an amorphous oligosaccharide in place of the crystalline oligosaccharide.

The crystalline oligosaccharide and fat-based confectionery composition of this fourth aspect may have any of the suitable features and advantages described above in relation to the first and second aspects.

According to a sixth aspect of the present invention there is provided a confectionery product comprising a fat-based composition according to first aspect or a fat-based confectionery filling composition according to the second aspect of the present invention. The fat-based confectionery composition may be moulded or extruded to form a bar (filled or solid) confectionery product. The fat-based confectionery composition may be moulded or deposited to form a solid or a filled confectionery product which may be of single mouthful size. The confectionery product may be in the shape of a ball or disc. Suitably the confectionery product is an individually packaged product or is provided as a plurality of individual physically separate products in a single package. In some embodiments, the fat-based confectionery composition according to the first aspect or the fat-based confectionery filling composition according to the second aspect suitably provides at least 50 wt% of the confectionery product, suitably at least 60 wt%, suitably at least 70 wt%, suitably at least 80 wt%, suitably at least 90 wt% or at least 95 wt% of the confectionery product.

Alternatively, the confectionery product may comprise the fat-based confectionery composition as a coating or filling. In such embodiments, the fat-based confectionery composition according to the first aspect or the fat-based confectionery filling composition according to the second aspect suitably provides at least 3 wt% of the confectionery product, suitably at least 5 wt%, suitably at least 10 wt%, suitably at least 20 wt%, suitably at least 30 wt%, suitably at least 50 wt% of the confectionery product.

### Examples - Chocolate Compositions

Chocolate compositions according to an embodiment of the first aspect of the present invention, comprising crystalline oligosaccharides, and comparative examples were prepared using the procedure described below. The chocolate compositions comprised 24.3 wt% fat and 63.6 wt% total carbohydrates and had a moisture content of less than 3 wt%.

**Table 1 - Typical milk chocolate composition 1**

| | |
|---|---|
| Sucrose | 44 to 51 wt% |
| Dairy powder | 10 to 13 wt% |
| Cocoa Mass | 7.5 to 12 wt% |
| Cocoa Butter | 15 to 20 wt% |
| Anhydrous milk fat (AMF) | 2.5 to 6 wt% |
| Emulsifier | 0.4 to 0.8 wt% |
| Flavourings | 0.05 to 0.75 wt% |

Example 1 comprised 15 wt% of crystalline raffinose pentahydrate (DP = 3, melting point = 77-78 °C) obtained from Sigma-Aldrich (CAS# 17629-30-0).

Example 2 comprised 15 wt% of crystalline melezitose hydrate (DP = 3, melting point = 153-154 °C) obtained from Acros Organics (CAS# 10030-67-8).

This corresponds to a 24% reduction in total sugars as compared to the equivalent "full sugar" reference chocolate composition.

The control was a chocolate composition comprising 24.3 wt% fat and 63.6 wt% total carbohydrates and had a moisture content of less than 3 wt%. 15 wt% of the composition was provided by icing sugar (fine sucrose).

Comparative Example 1 was a chocolate composition comprising coarse crystalline sucrose, comprising 24.3 wt% fat and 63.6 wt% total carbohydrates and having a moisture content of less than 3 wt%. 15 wt% of the composition was provided by granulated sucrose. The main purpose of the coarse crystalline sucrose composition was to give a reference texture, with this composition considered to be very 'gritty'

Comparative Example 2 was a chocolate composition comprising 24.3 wt% fat and 63.6 wt% total carbohydrates and had a moisture content of less than 3 wt%. 15 wt% of the composition was provided by amorphous galacto-oligosaccharide obtained from Ingredion.

Comparative Example 3 was a chocolate composition comprising 24.3 wt% fat and 63.6 wt% total carbohydrates and had a moisture content of less than 3 wt%. 15 wt% of the composition was provided by amorphous raffinose prepared by quench-cooling and drying a solution of crystalline raffinose pentahydrate, followed by cryo-grinding.

### Preparation of chocolate compositions

Examples 1 and 2, the control and Comparative Examples 1-3 were prepared as follows. Prior to preparing the chocolate samples, 150g of milk chocolate mass having the milk chocolate composition 1 as described above, was stored overnight in a 35 °C oven. 90g of this mass was pre-heated for 15 min in a 60 °C oven (chocolate portion A), while the remainder was separated and allowed to equilibrate at room temperature (chocolate portion B). The pre-heated chocolate portion A was then poured into a ECGC-12STLA melanger unit (Cocoatown, Roswell GA) equipped with Mini Drum and Roller Stone set, while the melanger was running with tension screw set at two turns below max. 22 g of the crystalline oligosaccharide (or the amorphous oligosaccharide, icing sugar or granulated sugar of the comparative examples) was added over 5 min into the running melanger. The melanger was then allowed to continue running and the mini-drum was occasionally heated with a heat- gun. After 180 min of running, melanger was stopped and 100 g of the mass was transferred into a Precise Heat Mixing Bowl (model# KSM1CBT, Kitchenaid, Benton Harbor, MI) and heated to 48 °C. For the "coarse" sugar sample, the melanger run time was reduced to just 4 min to allow the granulated sugar to disperse within the chocolate mass with minimal size reduction. Once the temperature was reached, the KSM1CBT bowl was mounted onto a stand mixer (model# KP26M1XOB, Kitchenaid, Benton Harbor, MI) and mixed for 5 min under the "stir" setting. Heating was then turned off and the mass was allowed to cool to 28 °C. Once this temperature was achieved, mixing was stopped and the "temper" mode was initiated on the KSM1CBT bowl. Once the bowl reached 40 °C under the "temper" mode, mixing was initiated once again under the "stir" setting. After 5 min, as per the program of the "temper" mode, the selection toggle button on KSM1CBT bowl was pressed and 34 g of the chocolate portion B was added slowly while the temperature dropped to 35 °C. The temperature continued to drop to 31 °C, until the "in temper" reading was displayed on the KSM1CBT bowl. At this point the tempered chocolate was transferred into 70 ml aluminium weighing dishes (Fisher Scientific catalog# 07-732-103). 15 g of chocolate was put into each dish, which was then covered with an empty dish (bottom side touching the chocolate) and a 1700 g weight was placed on top for 5 min to squeeze-out any air pockets. Next, the weight was removed and the dish was allowed to sit overnight at room temperature. The solid chocolate was then peeled off from the aluminium weighing dishes to yield uniform chocolate discs.

### Evaluation of Organoleptic Properties

A tasting panel was used to evaluate the organoleptic properties of the chocolate composition of the first aspect, the control composition, the comparative coarse crystalline sucrose composition and the comparative amorphous oligosaccharide composition.

The tasting panel consisted of 14 selected tasters. The tasters were provided with blind chocolate samples as described above. The tasters were asked to score differences vs the control on a -5 to a +5 scale for "mouthfeel", "sweetness" and "initial bite" (with control considered as 0, a positive figure denoting an improvement in the particular property and a negative figure denoting a decline in the particular property). For example, a sample with a more gummy mouthfeel would get a more negative score, a less sweet sample would get a more negative score, and a sample with a softer snap would also get a more negative score.

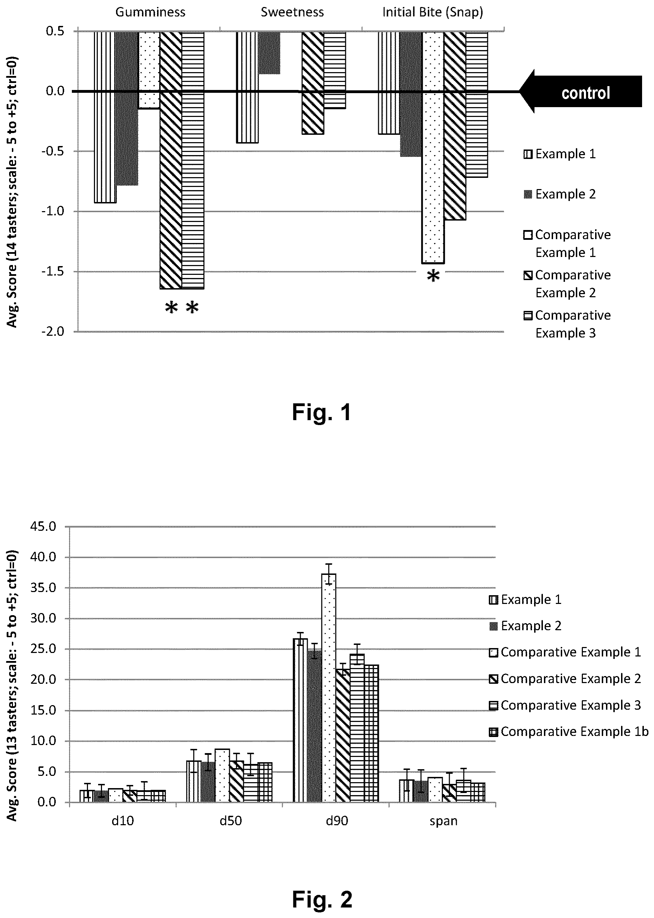

Mean scores for each sample were compared to the control using a t-test. The results obtained with Examples 1 and 2, and with Comparative Examples 1-3, are summarised in Figure 1. Samples with a significantly different score to the control were marked with an asterisk.

All of the compositions were found to have similar sweetness, with the control composition found to be the sweetest. However, the differences in sweet perception compared to the control were only small and not found to be statistically significant.

The control and crystalline oligosaccharide Examples 1 and 2 were found to have statistically similar mouthfeel. The Comparative Examples 2 and 3 comprising an amorphous oligosaccharide were found to have a significantly worse mouthfeel. This demonstrates that the use of crystalline oligosaccharides improves the mouthfeel of chocolate compositions compared to compositions comprising amorphous oligosaccharides.

Figure 2 shows the particle size distribution of each of the chocolate composition samples, as well as a further Comparative Example 1b which was the same Comparative Example 1 except for the replacement of the "coarse" sucrose with a "fine" sucrose (Dominos Icing sugar (6X)). The particle size distribution was measured using laser diffraction in a dispersant. The measurements were made on a Malvern Mastersizer 3000 optical bench, using Hydro SM dispersion unit and Akomed R20 as dispersant, as per protocol for chocolate particle size distribution analysis offered by Reading Scientific Services Limited (RSSL). All samples except the "coarse" granulated sucrose had a similar distribution of particle sizes.

### Evaluation of Viscosity

The ability of the chocolate compositions to rapidly build viscosity in a limited water environment (similar to oral cavity) was compared using an improvised method to measure viscosity using a Rapid Visco Analyzer, RVA (Perten Instruments RVA 4500). To prepare samples for testing, the chocolate discs were first cut into fine pieces that could pass through a 5 mesh sieve (4 mm opening). 4 g of the chocolate pieces were then placed in an aluminium can for RVA (Perten Instruments part# 102774) and a glass ball (marble) of 150 mm diameter (5.3 g weight) was placed in the can. Just prior to running the test, 0.75 g deionized water was added into the can and the plastic RVA paddle (Perten Instruments part# 102774) was inserted into the can, as per typical RVA procedure. The assembly was then placed in the RVA and subjected to 37°C, paddle rpm of 120 for 10 min. The use of glass ball ensures that the chocolate sample interacts with the water as it smears against the walls of the can, rather than just creeping up on the plastic paddle.

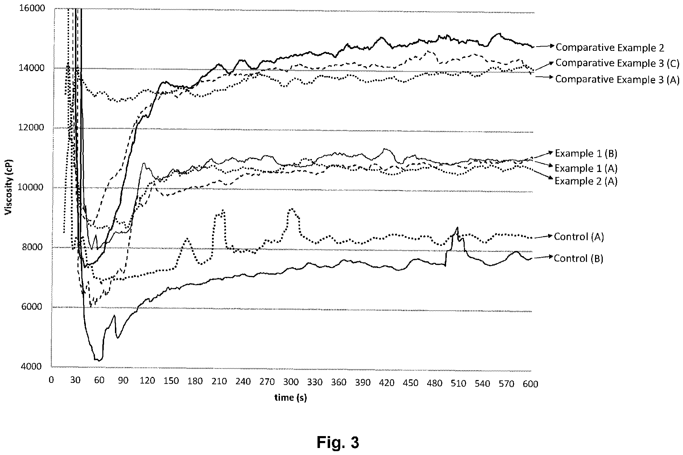

A plot of viscosity vs. time (shown in Figure 3) was generated for each chocolate and the data was fitted to a moving average trend line with a period of 15 seconds. The data in Figure 3 suggests that the chocolate compositions differed in their ability to build viscosity in a limited water environment. After 120 seconds at 37 °C, 120 rpm, the samples with amorphous oligosaccharides built up viscosities in excess 12000 cP, while those with crystalline oligosaccharides built up viscosities less than 12000 cP. This data, in conjunction with the organoleptic test results, demonstrates that the higher viscosities built up in chocolates comprising amorphous oligosaccharides (Comparative Examples 2 and 3) may be correlated to the unappealing mouthfeel/rheological properties found in these samples, and that the Examples 1 and 2 which comprise crystalline oligosaccharides have a significantly lower build-up of viscosity in a limited water environment which may correlate with the more favourable mouthfeel found in these samples.

### Examples A and B - scale-up manufacture

The following procedure was carried out to investigate whether reduced sugar chocolate made with crystalline oligosaccharides (for example crystalline raffinose, Examples A and B) can be effectively produced in a standard large scale chocolate manufacturing process, and to compare such a chocolate composition to a similar chocolate comprising soluble corn fibre (Promitor 70 - Comparative Example A) instead of crystalline oligosaccharide. The compositions of these Example and Comparative Example, and the control full sugar chocolate, are given in Table 2. Example A and Comparative Example A represent a 30% sugar replaced chocolate.

**Table 2**

| Ingredients | Control | Comp. Ex. A | Example A |
|---|---|---|---|
| Sucrose | 46.1% | 26.9% | 28.7% |
| SMP | 12.0% | 12.0% | 12.0% |
| Whey powder | 8.0% | 8.0% | 8.0% |
| Cocoa Mass | 10.2% | 10.2% | 10.2% |
| Cocoa Butter | 17.5% | 17.5% | 17.5% |
| AMF | 5.2% | 5.2% | 5.2% |
| SN100 | 0.7% | 0.7% | 0.7% |
| Vanillin | 0.0% | 0.0% | 0.0% |
| Hazelnut Paste | 0.4% | 0.4% | 0.4% |
| Promitor 70 | 0.0% | 19.2% | 0.0% |
| Crystalline raffinose | 0.0% | 0.0% | 17.4% |

Standard refining settings used with a standard commercial chocolate (S1) were used in a first refining stage. The S1 settings were used to refine the test samples and the particle size distribution of the samples was recorded. The target particle size was 26 +/- 2 microns. The resultant particle sizes at this fixed setting were compared to evaluate ease of processability of different samples. 500g of pre-refiner paste of each sample was then processed and the time taken to refine at S1 setting was recorded. This gave a throughput value. The throughput values of the different samples were compared at this fixed setting. The throughput value was expected to be inversely related to particle size. The target particle size was then achieved for each sample by fine-tuning the refiner (setting S2). The final particle size distribution was measured. The results of these tests are given in Table 3 below.

**Table 3**

| Sample | Pre-refiner settings (S1) | | Refiner settings (S1) | | | | Refiner settings (S2) | | |
|---|---|---|---|---|---|---|---|---|---|
| | Pressure | Gap (feeding | Pressure | Gap | D90 (µ) | Throughput (time taken to refine 500g) | Pressure | Gap | D90 (µ) |
| Control | 14 bar | 1:05/1:00 | 16 bar | 12:25/12:20 | 28.4 | 2 min 39 sec | - | - | - |
| Comp. Ex. A - rep1 | 14 bar | 1:05/1:00 | 16 bar | 12:25/12:20 | 63 | 59 sec | 19 bar | 12:15/12:10 | 43.4 |
| Comp. Ex. A - rep2 | 14 bar | 1:05/1:00 | 16 bar | 12:25/12:20 | 58.8 | 1 min 3 sec | 18 bar | 12:15/12:10 | 49 |
| 3rd pass | | | | | | | 17 bar | 12:15/12:10 | 27.3 |
| Example A | 14 bar | 1:05/1:00 | 16 bar | 12:25/12:20 | 33 | 1 min 57 sec | 16 bar | 12:15/12:10 | 29.2 |

### Results and conclusions

At 30% sugar reduction levels, Example A comprising crystalline raffinose is clearly easier to refine compared to Comparative Example A comprising Promitor 70, where a 3rd pass was necessary.

The d90 values are directly correlated with throughput values, where a longer throughput time resulted in a smaller d90 value.

The performance of Comparative Example A in this study was unusual, where a 3rd pass was required. This is mostly likely due to the fact that the "pre-refine" settings were derived from the standard commercial chocolate standard. It may be easier to refine Comparative Example A at higher pre-refine pressures, thus eliminating the need for a 3rd pass. It is expected that Example A will be even easier to refine at these settings, in line with the observation above.

Visual observations made during conching are given in Table 4.

**Table 4**

| Recipe | Visual observations | |
|---|---|---|
| | Dry conching (50°C) | Wet conching (50°C) |
| Control | Sticky paste | Smooth molten chocolate |
| Comp. Ex. A | Dry paste | Smooth molten chocolate |
| Example A | Sticky paste | Smooth molten chocolate |

### Examples 3 and 4 - 100% replaced sugar

### Preparation of chocolate compositions

The control, comparative and example chocolate compositions shown in Table 5 were prepared using the procedure below.

The control 2 sample comprised 50.0 g sucrose (Dominos Icing sugar (6X)).

Comparative Example 4 comprised 49.4 g amorphous 2'fucosyl lactose (Aequival 2'FL powder #781100 - Freisland).

Example 3 comprised 49.4 wt% of a commercially available crystalline 2' fucosyl lactose (DP = 3, melting point = 230-231 °C) (Glycare 2FL 9000, Glycom A/S).

Example 4 comprised 33.0 wt% of a commercially available crystalline 2' fucosyl lactose (DP = 3, melting point = 230-231 °C) (Glycare 2FL 9000, Glycom A/S) and 16.5 wt% of crystalline Lacto-N-Neotetraose (Glycare LNNT 9000, Glycom A/S).

**Table 5**

| Ingredients (wt%) | Control 2 | Comp. Ex. 4 | Ex. 3 | Ex. 4 |
|---|---|---|---|---|
| Sucrose | 50.0 | - | - | - |
| Amorphous 2'fucosyl lactose | - | 49.4 | - | - |
| Crystalline 2'fucosyl lactose | - | - | 49.4 | 33.0 |
| Crystalline lacto-N-neotetraose | - | - | - | 16.5 |
| Dairy powder | 12.8 | 12.6 | 12.6 | 12.6 |
| Cocoa liquor | 11.7 | 11.7 | 11.7 | 11.7 |
| Cocoa Butter | 18.9 | 19.4 | 19.4 | 19.4 |
| Anhydrous milk fat (AMF) | 5.7 | 5.9 | 5.9 | 5.9 |
| Emulsifier | 0.7 | 0.7 | 0.7 | 0.7 |
| Flavourings | 0.3 | 0.3 | 0.3 | 0.3 |
| | | | | |
| Added sugar | 50 | 0 | 0 | 0 |
| Total sugar (all sources) | 57 | 9 | 9 | 9 |

These comparative and example compositions were prepared as follows.

**Refining:** In a typical procedure, 70 g cocoa liquor and 145g cocoa butter were first preheated in an oven to 65°C. 455 g of the carbohydrate (sucrose, amorphous 2'fucosyl lactose, crystalline 2'fucosyl lactose, crystalline lacto-N-neotetraose) was weighed out. A stainless steel refiner (Vididem Jewel) was preheated with a heat gun and allowed to run with screw tension set at 1 turn below maximum. Cocoa liquor, cocoa butter and the carbohydrate were added incrementally to the refiner over a 90 min period, intermittently heating with a heat gun ensuring that the refiner kept running and the temperature of the contents was in the 50 to 65°C range. The resultant mass was either a paste (control 2) or a powder (Comp. Ex. 4, Ex. 3 and Ex. 4), which was allowed to continue mixing in the refiner for another 90 min, after which half the mass was removed from the refiner to reduce the volume.

Next, the screw tension was increased to ¼ turn below maximum and 58 g non-fat dry milk (NFDM) and the preheated liquids 19 g cocoa liquor, 17 g cocoa butter and 27 g AMF were incrementally added over a 60 min period to the mass remaining in the refiner. The resultant mass transformed into a continuous paste in all cases and was allowed to continue mixing in the refiner for another 90 min after which it was spread into a thin layer on a wax paper and stored overnight as a "refiner mass".

Throughout the process, the temperature was monitored with an infrared thermometer and a heat gun was used as needed to maintain the temperature within a 50 to 65°C range. The particle size of the mass was monitored using a grindometer (Hegman gauge) (2 parts of mass was diluted with 1 part of canola oil and tested on the gauge).

**Conching and Tempering:** 380 g of the refiner mass was weighed out and 280 g (¾ of the mass) was put into a Kitchenaid precise heat mixing bowl, with jacket preheated to 60°C. The remaining ¼ was set aside at ambient to provide a "seeding mass". The mass in the Kitchenaid was mixed at setting of "5" using a flex-edge paddle for 15 min after which the temperature reached ~51°C. At this point, the jacket temperature was set at 60°C and a 2 h timer was set (conche stage). At ~15 min into the conche stage, 2.62 g soy lecithin was added. At the end of the 2 h conche, the mass was cooled to ~50°C, at which point 1.2 g flavouring was added and mixing was continued for another 15 min and the mass viscosity was observed to decrease. Once the temperature dropped to ~45°C, the jacket was set at 33°C and the bowl was removed from the jacket. Mixing was allowed to continue at "5" by manually holding the bowl against the Kitchenaid paddle. When the temperature dropped to ~42°C, the seeding mass was added incrementally while mixing, allowing the temperature of the mass to drop. By the time the mass temperature had dropped to 32°C all the seeding mass had been added and the mass was allowed to cool further while mixing manually as before (the mass thickened and lost sheen). At 28°C, the bowl was re-fitted into the jacket (which was now at 33°C) and mixed at "5" for another 15 min. Once at 33°C again, the tempered chocolate mass had excellent flow and sheen and no lumps were observed.

**Molding:** The tempered chocolate mass at 33°C was transferred into flexible silicone moulds (70 to 72 g/ mould) and placed on a vibrating table for 5 min to remove any air, after which the filled moulds were stored overnight under ambient conditions. Firm chocolate bars with good sheen and snap were easily removed from the moulds the following day and were packed in aluminum foil wrappers and stored under ambient conditions.

### Evaluation of Organoleptic Properties

A tasting panel was used to evaluate the organoleptic properties of the chocolate composition Examples 3 and 4, the control composition and the comparative amorphous oligosaccharide composition (Comparative Example 4). The testing was carried out as described above in relation to Examples 1 and 2.

The tasting panel consisted of 12 selected tasters. The tasters were provided with blind chocolate samples as described above. The tasters were asked to score differences vs the control on a 0 to a -10 scale for "mouthfeel" (with control considered as 0 and a negative figure denoting a decline in the particular property). For example, a sample with a more gummy mouthfeel would get a more negative score.

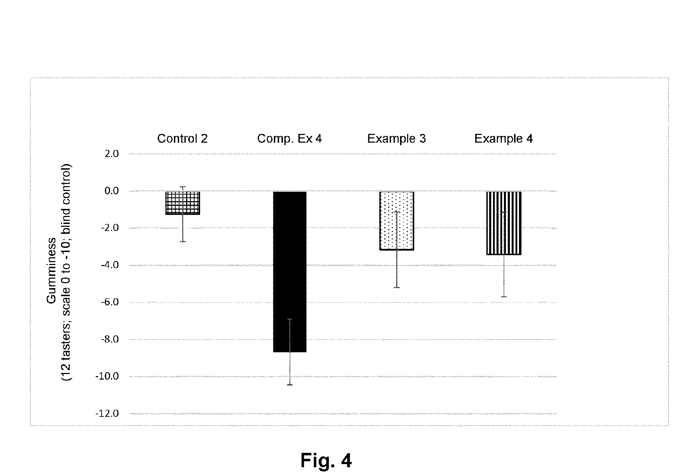

Mean scores for each sample were compared to the control using a t-test. The results obtained with control 2, Comparative Example 4 and Examples 3 and 4, are summarised in Figure 4.

The control 2 and the crystalline oligosaccharide Examples 3 and 4 were found to have statistically similar mouthfeel. The Comparative Example 4 comprising an amorphous oligosaccharide was found to have a significantly worse mouthfeel. This again demonstrates that the use of crystalline oligosaccharides improves the mouthfeel of chocolate compositions compared to compositions comprising amorphous oligosaccharides.

### Differential Scanning Calorimetry (DSC)

Differential Scanning Calorimetry was carried out on a TA Instruments Q2000 unit with nitrogen flow. 5 to 7 mg of the chocolate sample was placed in a Tzero aluminium pan and covered with a hermetic Tzero lid. Once the lid was properly crimped using a Tzero press crimping tool, a small pin-hole was made on the lid. An identical empty reference pan was prepared as well. The sample and reference pans were introduced to the instrument at 20°C and equilibrated for 5 min at that temperature under nitrogen, followed by heating at 5°C/min to 300°C.

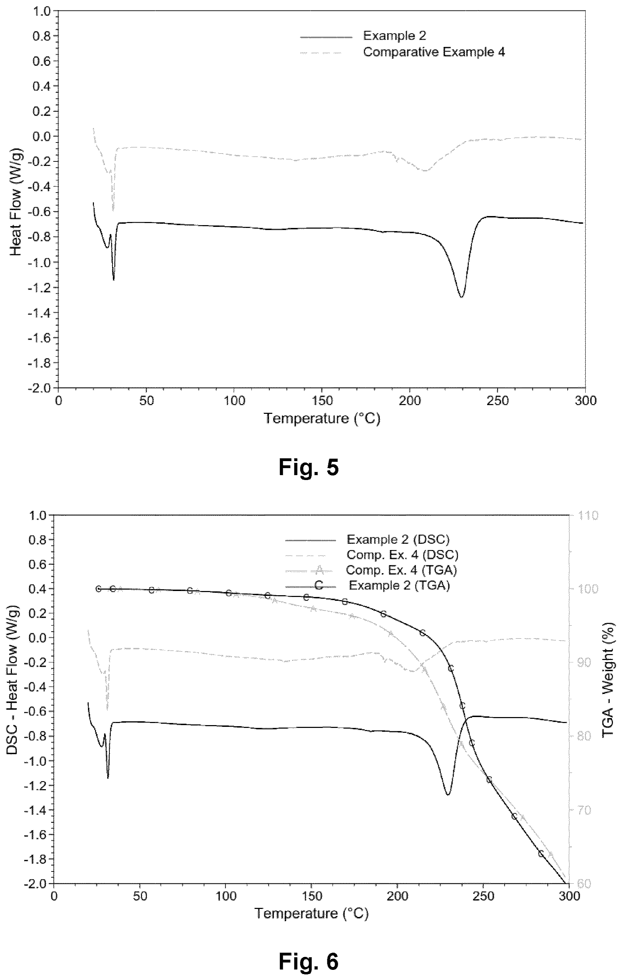

The DSC trace shown in Figure 5 was obtained in this manner and shows the melting of chocolate fats at around 30°C in both the Comparative Example 4 and Example 3 traces, the broad endothermic peak due to the decomposition of the amorphous 2'fucosyl lactose starting at around 190°C in the Comparative Example 4 trace and the sharp endothermic peak due to the phase transition (apparent melting) of the crystalline 2'fucosyl lactose at ~210°C in the Example 3 trace. The observed differences in the DSC traces for Comparative Example 4 and Example 3 are indicative of amorphous or crystalline nature of the oligosaccharide in each sample, respectively. These traces show that the crystalline 2'fucosyl lactose in Example 3 has maintained its crystallinity during the chocolate making process described above and remains crystalline in the finished chocolate.

### Thermogravimetric analyses (TGA)

Thermogravimetric analyses were carried out on a TA Instruments Q50 analyzer with nitrogen flow. ~9 mg of the chocolate samples were placed in a sample carrier and held at ambient temperature for 5 min under nitrogen flow to ensure that the furnace was filled with nitrogen. The sample was heated at 5°C/min to 300°C.

The TGA traces shown in Figure 6 were obtained for the Comparative Example 4 and Example 3 chocolate compositions. The DSC traces discussed above are overlaid onto the TGA traces for ease of interpretation. The trace for Comparative Example 4 comprising amorphous 2'fucosyl lactose shows >10% mass loss at T~210°C, corresponding to the broad decomposition peak of the amorphous 2'fucosyl lactose observed on DSC trace.

The trace for the Example 3 chocolate composition comprising crystalline 2'fucosyl lactose shows only ~5% mass loss at T~210°C, followed by sharp mass loss thereafter, corresponding to the peak for the phase transition (apparent melting) of the crystalline 2'fucosyl lactose shown in the DSC trace.

This data correlates with the observations from the DSC analysis and supports the conclusion that the crystalline 2'fucosyl lactose in Example 3 has maintained its crystallinity during the chocolate making process.

Both DSC and TGA were carried out under nitrogen flow to minimize lipid oxidation at higher temperatures.

### Examples - Filling Compositions

Filling (or crème) compositions according to an embodiment of the first and second aspects of the present invention (comprising crystalline oligosaccharides) a control comprising icing sugar (sucrose) and comparative examples were prepared by mixing 14 g of the carbohydrates (sugar and/or oligosaccharides) with 7 g palm fat in a Flack Tek mixer at 2400 rpm for 45 seconds.

Alternatively the filling compositions may be prepared by mixing carbohydrates (sugar and/or oligosaccharides) with molten fat to prepare a slurry (typically hot), which is then cooled, sheared and injected with air inside a swept surface heat exchanger (votator) to generate a plasticized crème (filling).

The filling compositions comprised 66.7 wt% carbohydrates and 33.3 wt% palm fat. The filling composition comprised less than 3 wt% moisture.

The control 3 comprised 14 g of Dominos Icing sugar (6X) as the carbohydrate component (33.3 wt% palm fat and 66.7 wt% sucrose).

Example 5 comprised 10.5 g of crystalline raffinose pentahydrate (DP = 3, melting point = 77-78 °C) obtained from Sigma-Aldrich (CAS# 17629-30-0) and 3.5 g Dominos Icing sugar (6X) (therefore 33.3 wt% palm fat, 50 wt% crystalline oligosaccharide and 16.7 wt% sucrose).

Example 6 comprised 3.5 g of crystalline raffinose pentahydrate (DP = 3, melting point = 77-78 °C) obtained from Sigma-Aldrich (CAS# 17629-30-0) and 10.5 g Dominos Icing sugar (6X) (therefore 33.3 wt% palm fat, 16.7 wt% crystalline oligosaccharide and 50 wt% sucrose).

Example 7 comprised 10.5 g of crystalline melezitose hydrate (DP = 3, melting point = 153-154 °C) obtained from Acros Organics (CAS# 10030-67-8) and 3.5 g Dominos Icing sugar (6X) (therefore 33.3 wt% palm fat, 50 wt% crystalline oligosaccharide and 16.7 wt% sucrose).

Example 8 comprised 3.5 g of crystalline melezitose hydrate (DP = 3, melting point = 153-154 °C) obtained from Acros Organics (CAS# 10030-67-8) and 10.5 g Dominos Icing sugar (6X) (therefore 33.3 wt% palm fat, 16.7 wt% crystalline oligosaccharide and 50 wt% sucrose).

Example 9 comprised 10.5 g of a commercially available crystalline 2' fucosyl lactose (DP = 3, melting point = 230-231 °C) and 3.5 g Dominos Icing sugar (6X) (therefore 33.3 wt% palm fat, 50 wt% crystalline oligosaccharide and 16.7 wt% sucrose).

These examples represent either a 25 % reduction in total sugars or a 75% reduction in total sugars as compared to the equivalent "full sugar" reference compositions (i.e. the control).

Comparative Example 5 comprised 10.5 g of amorphous raffinose (prepared as described above) and 3.5 g Dominos Icing sugar (6X) (therefore 33.3 wt% palm fat, 50 wt% amorphous oligosaccharide and 16.7 wt% sucrose).

Comparative Example 6 comprised 3.5 g of amorphous raffinose (prepared as described above) and 10.5 g Dominos Icing sugar (6X) (therefore 33.3 wt% palm fat, 16.7 wt% amorphous oligosaccharide and 50 wt% sucrose).

Comparative Example 7 comprised 10.5 g of amorphous melezitose, and 3.5 g Dominos Icing sugar (6X) (therefore 33.3 wt% palm fat, 50 wt% amorphous oligosaccharide and 16.7 wt% sucrose). The amorphous melezitose was prepared by heating crystalline melezitose hydrate to 150C under vacuum (< -600mmHg) for 72h, followed by cryo-grinding.

Comparative Example 8 comprised 3.5 g of amorphous melezitose and 10.5 g Dominos Icing sugar (6X) (therefore 33.3 wt% palm fat, 16.7 wt% amorphous oligosaccharide and 50 wt% sucrose).

Comparative Example 9 comprised 10.5 g of a amorphous 2' fucosyllactose and 3.5 g Dominos Icing sugar (6X) (therefore 33.3 wt% palm fat, 50 wt% amorphous oligosaccharide and 16.7 wt% sucrose). The amorphous 2' fucosyllactose was obtained in dry powder form (>90%, DM) from Jennewein Biotechnologie GmbH (CAS# 41263-94-9).

### Evaluation of Organoleptic Properties

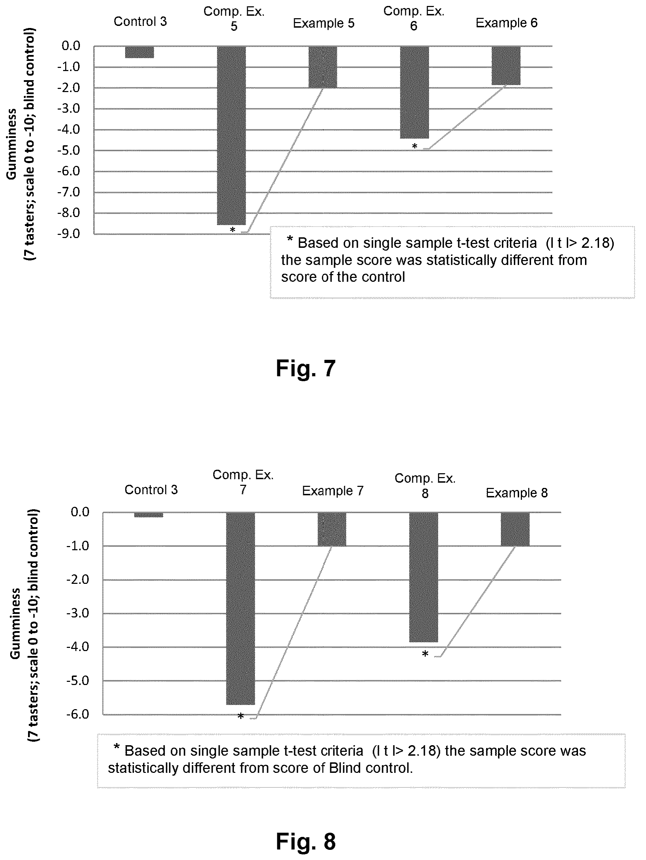

The organoleptic properties of the filling compositions were assessed using a tasting panel. The tasting panel consisted of at least 7 tasters, who were provided with filling samples and asked to score the mouthfeel of the samples on a 0 to -10 scale, with 0 representing not at all gummy and -10 representing extremely gummy. The control filling was also presented as a blind sample. Mean scores for each sample were compared to the mean value for the blind control using t-test criteria and samples with significant difference from the blind control were marked with an asterisk. The results are summarised in Figures 7 to 9. These results show that replacing sucrose with crystalline oligosaccharides at both the lower (25%) and higher (75%) replacement levels led to no statistically significant differences in mouthfeel. Hence, replacing as little as 25% to as much as 75% sucrose in a filling (crème) with crystalline oligosaccharides led to no statistically significant difference in mouthfeel. On the other hand, replacing 75% sucrose with amorphous oligosaccharides led to significantly worse mouthfeel. Upon replacing 25% sucrose with amorphous raffinose or melezitose, a statistically significant decrease in mouthfeel was perceived.

### Differential Scanning Calorimetry (DSC)

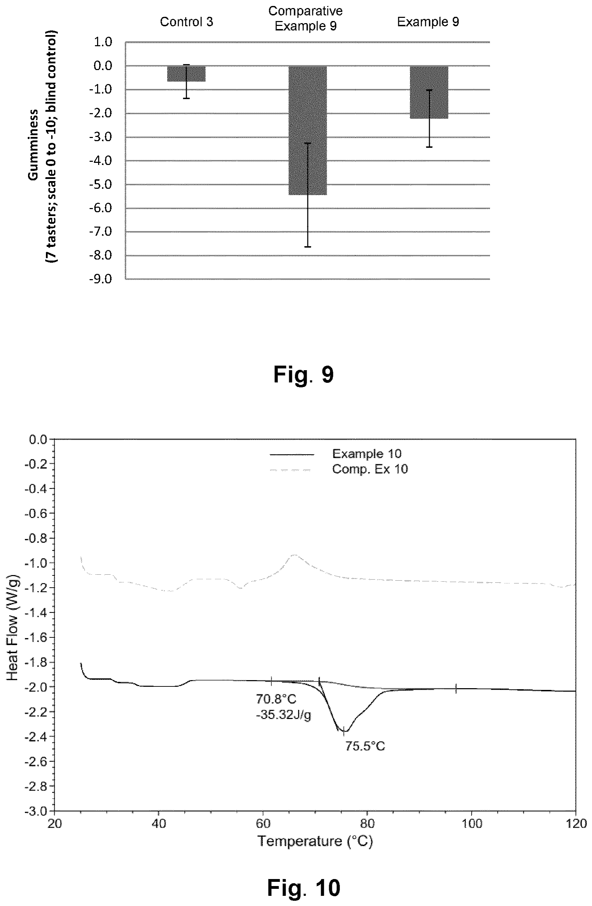

Differential Scanning Calorimetry was carried out (as described above for Example 3) on filling Example 10 and Comparative Example 10 which comprised 33.3 wt% palm fat, 23.3 wt% raffinose and 43.3 wt% sucrose. In Example 10 the raffinose was crystalline and in Comparative Example 10 the raffinose was amorphous. The DSC traces of these samples are shown in Figure 10. The observed differences in the DSC traces for Comparative Example 10 and Example 10 are indicative of amorphous or crystalline nature of the oligosaccharide in each sample, respectively. These traces show that the crystalline raffinose in Example 10 has maintained its crystallinity during the filling making process described above and remains crystalline in the finished filling composition.

### Evaluation of Viscosity

The ability of the filling compositions to rapidly build viscosity in a limited water environment (similar to oral cavity) was compared using the RVA method described above in relation to the chocolate compositions wherein 4 g of the filling composition samples were applied as a flat layer onto the bottom of aluminium can.

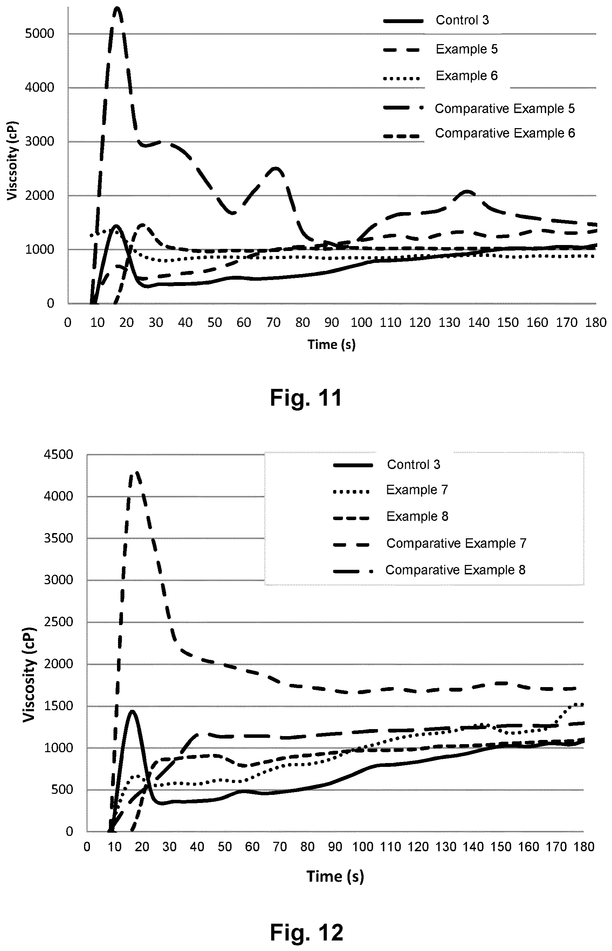

The results are shown in Figures 11 and 12 and conform with the organoleptic test data discussed above, showing that the filling comparative compositions comprising amorphous oligosaccharides (except for Comparative Example 6) have a higher build-up of viscosity in a limited water environment that the filling compositions of the present invention which comprise crystalline oligosaccharides.

In summary, the present invention provides a fat-based confectionery composition comprising a crystalline oligosaccharide. The crystalline oligosaccharide suitably has a melting point of at least 60°C. The crystalline oligosaccharide in the fat-based confectionery composition replaces at least a part of the added sugar content compared to a reference "full sugar" fat-based confectionery composition and therefore reduces the total sugars compared to said reference composition. The fat-based confectionery composition may therefore be considered a reduced sugar confectionery product. The fat-based confectionery composition may have a similar texture to the reference composition, in particular a similar viscosity and mouthfeel to a reference "full sugar" composition. The fat-based confectionery composition may be used to reduce the calorie intake, especially the intake of sugars, in consumers and may therefore provide a health benefit to said consumers. A method for producing the fat-based confectionery composition is also provided.

Although a few preferred embodiments have been shown and described, it will be appreciated by those skilled in the art that various changes and modifications might be made without departing from the scope of the invention, as defined in the appended claims.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, wherein amounts of components in a composition are described in wt%, this means the weight percentage of the specified component in relation to the whole composition referred to. For example, "wherein the fat-based confectionery composition comprises 20 to 40 wt% fat means that 20 to 40 wt% of the fat-based confectionery composition is provided by fat.

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, and drawings), or to any novel one, or any novel combination, of the steps of any method or process so disclosed.

The invention will now be described further in relation to the following numbered clauses.
1. A fat-based confectionery composition comprising a crystalline oligosaccharide, wherein the crystalline oligosaccharide does not have a melting point below 60 °C.
2. A fat-based confectionery composition comprising a crystalline oligosaccharide, wherein the fat-based confectionery composition is a filling composition.
3. The fat-based confectionery composition according to clause 1 or clause 2 comprising from 10 wt% to 75 wt% crystalline oligosaccharide.
4. The fat-based confectionery composition according to any one of the preceding clauses comprising a sugar, suitably sucrose.
5. The fat-based confectionery composition according to clause 4 comprising from 10 to 55 wt% total sugars.
6. The fat-based confectionery composition according to any one of the preceding clauses, wherein the crystalline oligosaccharide has a degree of polymerisation of from 3 to 5.
7. The fat-based confectionery composition according to any one of the preceding clauses, wherein the crystalline oligosaccharide is selected from raffinose, stachyose, lactosucrose, 2'- fucosyl lactose, maltotriose, isomaltotriose, isomaltotetraose, gentianose, melezitose, cellotriose, or mixtures thereof.
8. The fat-based confectionery composition according to any one of the preceding clauses comprising at least 20 wt% fat.
9. The fat-based confectionery composition according to clause 1, wherein the fat-based confectionery composition is a chocolate composition comprising a cocoa-derived product, from 26 to 42 wt% total fat, from 30 to 50 wt% total sugars and from 5 to 30 wt% crystalline oligosaccharide.
10. The fat-based confectionery composition according to clause 1, wherein the fat-based confectionery composition is a chocolate composition comprising a cocoa-derived product, from 26 to 42 wt% total fat, from 40 to 55 wt% crystalline oligosaccharide and from 6 to 12 wt% total sugars.
11. The fat-based confectionery composition according to clause 10, comprising no added sugar.
12. The fat-based confectionery composition according to any one of clauses 9 to 11, wherein the fat-based confectionery composition is a milk chocolate composition.
13. The fat-based confectionery composition according to any one of clauses 1 to 8, wherein the fat-based confectionery composition is a filling composition comprising from 25 to 40 wt% fat, from 10 to 60 wt% crystalline oligosaccharide and 5 to 55 wt% sugar, suitably sucrose.
14. The fat-based confectionery composition according to any one of clauses 1 to 8, wherein the fat-based confectionery composition is a filling composition comprising from 25 to 40 wt% fat, from 60 to 75 wt% crystalline oligosaccharide and no sugar.
15. The fat-based confectionery composition according to any one of the preceding clauses which does not comprise a polydextrose, inulin, sugar alcohol, polyol or an intense sweetener.
16. The fat-based confectionery composition according to any one of the preceding clauses having a moisture content of less than 3 wt%.
17. The fat-based confectionery composition according to any one of the preceding clauses, wherein the crystalline oligosaccharide is a crystalline soluble fibre which is digestion resistant.
18. A method for the production of a fat-based confectionery composition, the method comprising the steps of:
   a) combining a fat and a crystalline oligosaccharide; and
   b) processing the mixture obtained in step (a) to form a fat-based confectionery composition.
19. Use of a crystalline oligosaccharide in a fat-based confectionery composition to improve the mouthfeel of said fat-based confectionery composition.
20. A confectionery product comprising a fat-based composition according to any one of clauses 1 to 17.

## Claims

1. A confectionery product comprising a fat-based confectionery composition comprising a crystalline oligosaccharide, wherein the crystalline oligosaccharide has a melting point of at least 60°C.

2. The confectionery product according to claim 1, wherein the fat-based confectionery composition comprises:
from 10 wt.% to 75 wt.% of the crystalline oligosaccharide;
from 20 wt.% to 60 wt.% fat; and
from 0 wt.% to 45 wt.% sucrose;
wherein the confectionery product does not include a sugar alcohol.

3. The confectionery product according to claim 2, wherein the fat is cocoa butter, palm oil, or shea butter.

4. The confectionery product according to any one of the preceding claims, wherein the composition comprises 20 to 40 wt.% fat.

5. The confectionery product according to any one of the preceding claims, wherein the fat-based confectionery component is a filling composition.

6. The confectionery product according to claim 5, wherein the filling composition comprises 25 wt.% to 40 wt.% fat, 40 to 60 wt.% of the crystalline oligosaccharide, and 5 wt.% to 25 wt.% sucrose.

7. The confectionery product according to claim 6, wherein the filling composition does not comprise a cocoa derived product.

8. The confectionery product according to claim 1, wherein the fat-based confectionery component is a chocolate composition.

9. The confectionery product according to claim 8, wherein the fat-based confectionery component comprises from 10 to 35 wt.% cocoa-derived product.

10. The confectionery product according to any one of the preceding claims, wherein a total sugar content of the chocolate composition is from 10 wt.% to 55 wt.%.

11. The confectionery product according to claim 1, wherein the crystalline oligosaccharide comprises galactose and/or glucose as a predominant monomer unit and wherein the crystalline oligosaccharide is free of fructose.

12. The confectionery product according to claim 1, wherein the crystalline oligosaccharide has a degree of polymerization of from 3 to 5.

13. The confectionery product according to claim 1, wherein the fat-based confectionery component comprises the crystalline oligosaccharide and sucrose in a ratio of from 1:8 to 6: 1.

14. The confectionery product according to claim 1, wherein the fat-based confectionery component comprises no polydextrose, inulin, or an intense sweetener, wherein the intense sweetener is at least one of aspartame, acesulfame-k, cyclamates, saccharin, sucralose, neohesperidin, dihydrochalone, alitame, stevia, steviol glycosides, monk fruit, mogrosides, and glycyrrhizin.

15. The confectionery product according to claim 1, wherein the fat-based confectionery composition has a moisture content of less than 3 wt.%.
